# EUROPEAN PATENT APPLICATION

(11) **EP 4 755 629 A1**
(43) Date of publication of application: **10.06.2026**
(21) Application number: 24865515.1
(22) Date of filing: 12.09.2024
(51) Int. Cl.: B32B 27/00, B29C 45/14, B32B 27/20, B41M 3/06, G02F 1/1335, G09F 9/00

(54) **MOLDED ARTICLE, DISPLAY DEVICE, INJECTION MOLDING METHOD, INJECTION MOLDED ARTICLE, AND LIQUID CRYSTAL PANEL**

(30) Priority: 12.09.2023 JP 2023147642; 23.01.2024 JP 2024008279; 22.03.2024 JP 2024046368
(71) Applicant: TOPPAN Holdings Inc., Tokyo 110-0016 (JP)
(72) Inventor: TAKEDA, Tadashi, Tokyo 110-0016 (JP); FUNAKI, Hayato, Tokyo 110-0016 (JP); SUZUKI, Jotaro, Tokyo 110-0016 (JP)
(74) Representative: SSM Sandmair
(86) International application number: PCT/JP2024/032706
(87) International publication number: WO 2025/058015

(57) **Abstract**

A pattern printing layer includes a first color pattern layer provided on one face of a base material layer and configured with a plurality of first color dots, and a second color pattern layer provided on the first color pattern layer and configured with a plurality of second color dots, each of the plurality of first color dots includes a first color binder and a plurality of first color pigment chips dispersed within the first color binder, each of the plurality of second color dots includes a second color binder and a plurality of second color pigment chips dispersed within the second color binder, one of the plurality of first color pigment chips and the plurality of second color pigment chips is first interference pigments of a plurality of colors that generate different first interference light beams, the other of the plurality of first color pigment chips and the plurality of second color pigment chips is second interference pigments that generate second interference light of a monochromatic color different from a mixed color exhibited by the plurality of first interference pigments, and additive color mixing of the plurality of first interference light beams and the second interference light is performed.

## Description

### Technical Field

The present disclosure relates to a molded product, a display device, an injection molding method, an injection molded product, and a liquid crystal panel.

### Background Art

In the related art, as a decorative sheet for walls and the like, a decorative sheet having a base material and a printing layer, which is provided on the surface of the base material and having a pattern such as a wood grain pattern or an abstract pattern, is known. On a wall surface on which the decorative sheet is installed, the above-mentioned pattern is visually recognized at all times. On the other hand, it is required that the visually recognized pattern changes depending on whether a light source installed on the rear face side of the decorative sheet is used.

For example, PTL 1 discloses a display device provided with a light source under a decorative sheet, and discloses a printed material in which, when the light source is turned off, a design is visually recognized by reflected light from a printing layer configured with RGB interference pigments, while when the light source is turned on, a design is visually recognized by transmitted light from a CMY printing layer (see FIG. 11 of PTL 1). PTL 2 discloses a decorative sheet that has two designs using interference pigments, and when an image on the rear face side is not displayed, the design is visually recognized, and when an image on the rear face side is displayed, the image is visually recognized (see FIGS. 1 and 2 of PTL 2).

### Citation List

### Patent Literature

[Patent Literature 1] Japanese Patent No. 5725581
[Patent Literature 2] Japanese Patent No. 6839319
[Patent Literature 3] Japanese Unexamined Patent Publication No. 2021-178431
[Patent Literature 4] Japanese Unexamined Patent Publication No. 2019-66842

### Summary of Invention

### Technical Problem

The printed material disclosed in PTL 1 includes a first color pattern layer, a second color pattern layer, and a third color pattern layer, in which a pigment chip included in each of the pattern layers is any one of a red interference pigment, a green interference pigment, and a blue interference pigment. In this printed material, the number of pattern layers is larger than in the printing of the related art in order to make colors more vivid. The decorative sheet disclosed in Patent Literature 2 includes a first design layer that contains a plurality of types of interference pigments and exhibits a first mixed color, and a second design layer that includes a plurality of types of interference pigments and exhibits a second mixed color different from the first mixed color. In this decorative sheet, each of the first and second design layers contains a plurality of types of interference pigments, which may result in a concern that color mixing and registration work become complicated during printing.

An object of the present disclosure is to solve the above-described problems and to provide molded products with excellent manufacturing efficiency by making it possible to express three-dimensional patterns even with a small number of printing layers of a decorative sheet, and by simplifying color mixing and registration work when printing decorative sheets.

Another object of the present disclosure is to provide an injection molding method, an injection molded product, and a display device which are capable of curbing color tone changes of patterns related to decoration of light transmissive decorative insert films.

Still another object of the present disclosure is to provide a liquid crystal panel and a display device which are capable of reducing external light reflection in a display part when a display unit is turned on, curbing a decrease in gloss level in areas other than the display part, and concealing the display when the display unit is turned off.

### Solution to Problem

A molded product according to the present disclosure includes a resin molded body and a decorative sheet disposed on a surface of the resin molded body, in which the resin molded body and the decorative sheet are visible light transmissive, the decorative sheet includes a base material layer and a pattern printing layer, the pattern printing layer includes a first color pattern layer provided on one face of the base material layer and configured with a plurality of first color dots, and a second color pattern layer provided on the first color pattern layer and configured with a plurality of second color dots, each of the plurality of first color dots includes a first color binder and a plurality of first color pigment chips dispersed within the first color binder, each of the plurality of second color dots includes a second color binder and a plurality of second color pigment chips dispersed within the second color binder, one of the plurality of first color pigment chips and the plurality of second color pigment chips is first interference pigments of a plurality of colors that generate different first interference light beams, the other of the plurality of first color pigment chips and the plurality of second color pigment chips is second interference pigments that generate second interference light of a monochromatic color different from a mixed color exhibited by the plurality of first interference pigments, and additive color mixing of the plurality of first interference light beams and the second interference light is performed.

A display device according to the present disclosure includes a light source.

An injection molding method according to the present disclosure includes preparing a light transmissive decorative insert film having a transmittance of visible light of 10% or more and 80% or less by decorating a film, preparing a resin having a transmittance of visible light of 40% or less by adding pigments to a transparent resin, and inserting the light transmissive decorative insert film into a mold and injecting the resin into the mold to mold an injection molded product.

An injection molded product according to the present disclosure is molded by the injection molding method described above.

A display device according to the present disclosure includes the injection molded product described above and a display unit.

An object of the present disclosure is to provide a liquid crystal panel and a display device which are capable of reducing external light reflection in a display part when a display unit is turned on, curbing a decrease in gloss level in areas other than the display part, and concealing the display when the display unit is turned off.

A liquid crystal panel according to the present disclosure is a liquid crystal panel including at least a light transmissive base material and a pattern printing layer, in which the pattern printing layer includes a pattern layer provided on one face side of the light transmissive base material and configured with a plurality of dots, each of the plurality of dots includes a binder and a plurality of pigment chips dispersed within the binder, the plurality of pigment chips are interference pigments, the other surface of the light transmissive base material opposite to the pattern printing layer has a display part having light transmittance and an outer peripheral part on the outer periphery side of the display part, the display part has a treated part having been subjected to anti-glare treatment, and the outer peripheral part has a resin layer having been subjected to a stamping process using an ultraviolet curable resin.

As one aspect, a display device according to the present disclosure includes the above-described liquid crystal panel and a display unit.

### Advantageous Effects of Invention

According to the present disclosure, it is possible to express patterns with a three-dimensional effect even with a small number of printing layers of decorative sheets, and to provide molded products with excellent manufacturing efficiency by simplifying color mixing and registration work when printing the decorative sheets.

According to the present disclosure, it is also possible to provide an injection molding method, an injection molded product, and a display device which are capable of curbing color tone changes of patterns related to decoration of light transmissive decorative insert films.

According to the present disclosure, it is also possible to provide a liquid crystal panel and a display device which are capable of reducing external light reflection in a display part when a display unit is turned on, curbing a decrease in gloss level in areas other than the display part, and concealing the display when the display unit is turned off.

### Brief Description of Drawings

FIG. 1 is a cross-sectional view schematically illustrating a display device according to Example 1-1.
FIG. 2 is a cross-sectional view schematically illustrating a pattern printing layer provided in the display device illustrated in FIG. 1.
FIG. 3 is a cross-sectional view schematically illustrating a printed material according to Example 1-2.
FIG. 4 is a cross-sectional view schematically illustrating a white pattern layer provided in the printed material illustrated in FIG. 3.
FIG. 5 is a cross-sectional view schematically illustrating a printed material according to Example 1-3.
FIG. 6 is a cross-sectional view schematically illustrating a printed material according to Example 1-4.
FIG. 7 is a cross-sectional view schematically illustrating a pattern printing layer provided in a display device according to Example 2-1.
FIG. 8 is a chart showing configurations of printed materials according to Experimental Examples 1 to 3.
FIG. 9 is a cross-sectional view schematically illustrating a pattern printing layer provided in a display device according to Example 3-1.
FIG. 10(a) is a schematic diagram illustrating a color combination of a pattern printing layer, and FIG. 10(b) is a schematic diagram illustrating a color combination of a pattern printing layer according to a comparative example.
FIG. 11 is a schematic diagram illustrating a specific example of a color combination of a pattern printing layer.
FIG. 12 is a cross-sectional view schematically illustrating a pattern printing layer provided in a display device according to Example 4-1.
FIG. 13(a) is a schematic diagram illustrating a color combination of a pattern printing layer, and FIG. 13(b) is a schematic diagram illustrating a color combination of a pattern printing layer according to a comparative example.
FIG. 14 is a schematic diagram illustrating a specific example of a color combination of a pattern printing layer.
FIG. 15(a) is a diagram illustrating a light source 3 covered by a printed material viewed from the front side when the power supply of the light source is in an OFF state, and FIG. 15(b) is a diagram illustrating a light source 3 covered by a printed material viewed from the front side when the power supply of the light source is in an ON state.
FIG. 16 is a schematic side view illustrating a display device including a liquid crystal panel according to the present embodiment.
FIG. 17 is a front view illustrating the display device including the liquid crystal panel according to the present embodiment.
FIG. 18 is an enlarged cross-sectional view illustrating a structure near the face of a light transmissive base material for a panel.
FIG. 19 is a schematic side view illustrating a display device including a liquid crystal panel according to a modification example.
FIG. 20 is a cross-sectional view schematically illustrating an injection molded product according to an embodiment of the present disclosure.
FIG. 21 is a cross-sectional view and a plan view schematically illustrating a display device according to an embodiment of the present disclosure.
FIG. 22 is a cross-sectional view schematically illustrating a light transmissive decorative insert film.
FIG. 23 is a cross-sectional view schematically illustrating an example of a specific structure of a pattern layer.
FIG. 24 is a process diagram of an injection molding method according to an embodiment of the present disclosure.
FIG. 25 is a schematic diagram illustrating a procedure of an injection molding method.
FIG. 26 is a cross-sectional view schematically illustrating an injection molded product according to a comparative example.
FIG. 27 is a cross-sectional view and a plan view schematically illustrating a display device according to a comparative example.
FIG. 28 is a cross-sectional view schematically illustrating a display device according to Embodiment 3-1.
FIG. 29 is a cross-sectional view schematically illustrating a molded product according to Embodiment 3-2.
FIG. 30 is a cross-sectional view schematically illustrating a decorative sheet according to Embodiment 3-3.
FIG. 31 is a cross-sectional view schematically illustrating a decorative sheet according to Embodiment 3-4.
FIG. 32 is a diagram illustrating in-vehicle equipment.
FIG. 33 is an exploded perspective view of in-vehicle equipment.
FIG. 34 is an exploded cross-sectional view of in-vehicle equipment.
FIG. 35 is a diagram illustrating in-vehicle equipment.
FIG. 36 is a diagram illustrating in-vehicle equipment.

### Description of Embodiment

### [First disclosure]

In the related art, a liquid crystal panel is known in which one surface of a light transmissive base material includes a display part having light transmittance and an outer peripheral part on the outer periphery side of the display part, the display part having a treated part having been subjected to anti-glare treatment and the outer peripheral part having a resin layer having been subjected to a stamping process using an ultraviolet curable resin. (Japanese Unexamined Patent Publication No. 2019-66842). The other surface of the light transmissive base material is printed in black at a location corresponding to the outer peripheral part.

Here, for example, when the liquid crystal panel is used for in-vehicle applications, it is required to reduce external light reflection during the display of a display device and to curb a decrease in gloss level in areas other than the display part. On the other hand, when the display device is turned off, it is required to conceal the display device so that it is not visible.

An object of the present disclosure is to provide a liquid crystal panel and a display device which are capable of reducing external light reflection in a display part when a display unit is turned on, curbing a decrease in gloss level in areas other than the display part, and concealing the display when the display unit is turned off.
[1] As one aspect, a liquid crystal panel according to the present disclosure is a liquid crystal panel including at least a light transmissive base material and a pattern printing layer, in which the pattern printing layer is provided on one face side of the light transmissive base material and includes a pattern layer configured with a plurality of dots, each of the plurality of dots includes a binder and a plurality of pigment chips dispersed within the binder, the plurality of pigment chips are interference pigments, the other surface of the light transmissive base material opposite to the pattern printing layer has a display part having light transmittance and an outer peripheral part on the outer periphery side of the display part, the display part has a treated part having been subjected to anti-glare treatment, and the outer peripheral part has a resin layer having been subjected to a stamping process using an ultraviolet curable resin.
   The other surface of the light transmissive base material opposite the pattern printing layer has the display part having light transmittance and the outer peripheral part on the outer periphery side of the display part, in which the display part has the treated part having been subjected to anti-glare treatment, and the outer peripheral part has the resin layer having been subjected to a stamping process using an ultraviolet curable resin. For this reason, the treated part having been subjected to anti-glare treatment is formed in the display part, and thus it is possible to reduce external light reflection in the display part and prevent reflection and the like. Additionally, the resin layer having been subjected to a stamping process using an ultraviolet curable resin is formed in the outer peripheral part, and thus it is possible to curb a decrease in gloss level in the outer peripheral part. The pattern printing layer is provided on one face side of the light transmissive base material and includes the pattern layer configured with a plurality of dots, each of the plurality of dots includes a binder and a plurality of pigment chips dispersed within the binder, and the plurality of pigment chips are interference pigments. In this case, the pattern printing layer can conceal a display unit when the display is off. Thereby, an image of the display unit is displayed on the display part. On the other hand, the pattern printing layer can conceal the presence of the display unit by a pattern when the display unit is turned off. For this reason, the pattern on the pattern printing layer is displayed on the display part. As described above, the liquid crystal panel can reduce external light reflection at the display part during the display of the display unit, curb a decrease in gloss level in regions other than the display part, and conceal the display unit during a turn-off state of the display unit.
[2] In the liquid crystal panel of [1] above, the anti-glare treatment may be performed using a shot-blasting process. Thereby, it is possible to more reduce external light reflection in the display part including the treated part and prevent reflection and the like.
[3] The liquid crystal panel of [1] or [2] above may further include a white pattern layer provided on the pattern printing layer and configured with a plurality of silver dots, and each of the plurality of silver dots may include a silver binder and a plurality of silver pigment chips dispersed within the silver binder. In this case, a first color pattern layer and a second color pattern layer have excellent color development, and the pattern printing layer can have a pattern giving a whitish impression.
[4] The liquid crystal panel of any of the above [1] to [3] may further include a transmissive smoke printing layer provided on an outermost surface on a side opposite to the light transmissive base material with respect to the pattern printing layer. In this case, color development of the first and second color pattern layers is more excellent. Furthermore, since the transmissive smoke printing layer has transparency, a decrease in the visibility of an image on the display device is well curbed.
[5] In the liquid crystal panel of any of [1] to [4] above, the pattern layer may include the first color pattern layer provided on one face side of the light transmissive base material and configured with a plurality of first color dots, and a second color pattern layer provided on the first color pattern layer and configured with a plurality of second color dots, each of the first color dots may include a first color binder and a plurality of first color pigment chips dispersed within the first color binder, each of the second color dots may include a second color binder and a plurality of second color pigment chips dispersed within the second color binder, one of the first color pigment chip and the second color pigment chip may develop a color as interference light on a reflected light side and includes interference pigments of a plurality of different colors, the other of the first color pigment chip and the second color pigment chip may develop a color as interference light on the reflected light side and include one type of interference pigment developing a color different from a mixed color exhibited by the interference pigments of the plurality of colors included in the any one of the first and second color pigment chips, and the interference light may be subjected to additive color mixing. Since one of the first and second color pattern layers contains interference pigments of a plurality of colors which generate different interference light beams, a pattern expression with a three-dimensional effect can be achieved even with a small number of printing layers. Furthermore, since only one of the first and second color pattern layers is required as a pattern layer containing interference pigments that generate a plurality of interference light beams, color mixing and registration work at the time of printing can be simplified. Thus, according to this printed material, it is possible to express a pattern with a three-dimensional effect even with a small number of printing layers and simplify color mixing and registration work at the time of printing.
[6] In the liquid crystal panel of any of [1] to [4] above, the pattern layer may include a first color pattern layer provided on one face side of the light transmissive base material and configured with a plurality of first color dots, and a second color pattern layer provided on the first color pattern layer and configured with a plurality of second color dots, each of the first color dots may include a first color binder and a plurality of first color pigment chips dispersed within the first color binder, each of the second color dots may include a second color binder and a plurality of second color pigment chips dispersed within the second color binder, the plurality of first color pigment chips may be first interference pigments that generate monochromatic first interference light, the plurality of second color pigment chips may be second interference pigments that generate monochromatic second interference light different from the color exhibited by the first interference pigments, and the first interference light and the second interference light may be subjected to additive color mixing. For example, for a pattern that can be expressed with a small number of colors, the interference pigments contained in the first and second color pattern layers are narrowed to a monochromatic color, and thus the pattern can be expressed using only the concentration of the monochromatic color. In this manner, color mixing and registration work can be simplified at the time of printing. Thus, according to the printed material, it is possible to simplify the color mixing and registration work at the time of printing.
[7] In the liquid crystal panel of any of [1] to [4] above, the pattern layer may include a first color pattern layer provided on one face side of the light transmissive base material and configured with a plurality of first color dots, and a second color pattern layer provided on the first color pattern layer and configured with a plurality of second color dots, each of the first color dots may include a first color binder and a plurality of first color pigment chips dispersed within the first color binder, each of the second color dots may include a second color binder and a plurality of second color pigment chips dispersed within the second color binder, one of the plurality of first color pigment chips and the plurality of second color pigment chips may be first interference pigments of a plurality of colors which generate different first interference light beams, the other of the plurality of first color pigment chips and the plurality of second color pigment chips may be second interference pigments generating monochromatic second interference light of the same color as one of the plurality of first interference pigments, and additive color mixing of the plurality of first interference light beams and the second interference light may be performed. Since one of the first and second color pattern layers contains interference pigments of a plurality of colors which generate different interference light beams, a pattern expression with a three-dimensional effect can be achieved even with a small number of printing layers. Furthermore, in this printed material, since only one of the first and second color pattern layers is required as a pattern layer containing interference pigments that generate a plurality of interference light beams, color mixing and registration work at the time of printing can be simplified. On the other hand, the other of the first and second color pattern layers contains the second interference pigments that generate monochromatic second interference light of the same color as one of the plurality of first interference pigments. For example, for a pattern that can be expressed with a small number of colors, the second interference pigments are narrowed to a monochromatic color of the same color as the first interference pigment, and thus the pattern can be expressed using the concentration of the monochromatic color. When a certain color tone is to be emphasized, it is easier to adjust the color tone by using two layers, the first and second color pattern layers, than by using only one color pattern layer. When too much interference pigment is added to one color pattern layer, the strength of a coating film will decrease, but a decrease in strength can be curbed by using two color pattern layers. As described above, it is possible to simplify color mixing and registration work at the time of printing.
[8] As one aspect, a display device according to the present disclosure includes the liquid crystal panel according to [1] to [7] above and a display unit.

In the display device of [8] above, it is possible to obtain the same actions and effects as those of the liquid crystal panel of [1] above.

According to the present disclosure, it is possible to provide a liquid crystal panel and a display device which are capable of reducing external light reflection in a display part when a display unit is turned on, curbing a decrease in gloss level in areas other than the display part, and concealing the display when the display unit is turned off.

Specific examples of a liquid crystal panel and a display device according to embodiments of the present disclosure will be described below with reference to the drawings. It should be noted that the present disclosure is not limited to these examples, but is defined by the scope of the claims, and is intended to include all modifications within the meaning and scope equivalent to the claims. In the following description, the same elements in the drawings are denoted by the same symbols, and redundant explanations are omitted.

### [Regarding printed material]

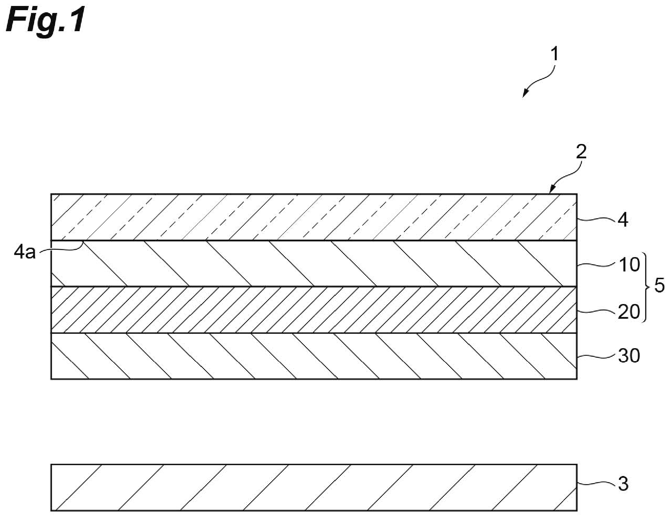

First, an example of a printed material used in the present embodiment will be described with reference to FIGS. 1 to 15. However, the contents described with reference to FIGS. 1 to 15 are merely examples of printed materials that can be adopted in the present disclosure. Thus, layer structures of printed materials exemplified in the description with reference to FIGS. 1 to 15, and the like do not limit the layer structure of a printed material adopted in the present disclosure. In order to describe a printed material, FIG. 1 illustrates a printed material that is incorporated into the display device. In this specification, when a printed material is formed by printing dot-shaped ink, a layer structure of the printed material may include a structure in which a part of a certain layer and a part of another layer are at the same position in a thickness direction or are interdigitated with each other, and may also include a structure in which, when observed in a plan view, a pattern forming a certain layer and a pattern forming another layer overlap each other in some parts and do not overlap each other in other parts. Each layer in the layer structure of the printed material can also be considered as a stack of printing patterns.

### [Example 1-1]

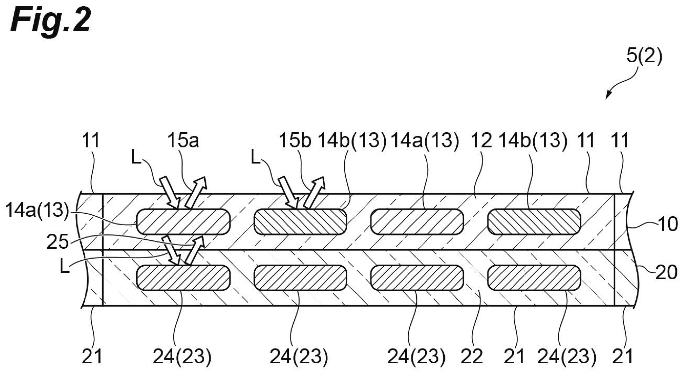

FIG. 1 is a cross-sectional view schematically illustrating a display device according to Example 1-1. FIG. 2 is a cross-sectional view schematically illustrating a pattern printing layer provided in the display device illustrated in FIG. 1. The display device 1 includes a printed material 2 and a light source 3, as illustrated in FIG. 1. The printed material 2 is a sheet for expressing a pattern, and includes a light transmissive base material 4, a pattern printing layer 5, and a transmissive smoke printing layer 30. The printed material 2 is provided in front of the light source 3 (between a viewer and the light source 3). The printed material 2 has full light transmittance. For this reason, when the power supply of the light source 3 is in an ON state, the viewer can visually recognize light from the light source 3 which is transmitted through the printed material 2, and when the power supply of the light source 3 is in an OFF state, the viewer can visually recognize a pattern expressed by the printed material 2. The light source 3 is, for example, a display unit.

The light transmissive base material 4 is a visible light transmissive base material. The light transmissive base material 4 is, for example, made of a transparent resin. PET, PMMA, polycarbonate, polyethylene, polypropylene, and nylon are examples of the transparent resin. The light transmissive base material 4 may be a glass base material. The thickness of the light transmissive base material 4 is, for example, 25 µm to 250 µm, but base materials with thicknesses below or above this range can also be used if printing is possible. In the case of a glass base material, for example, a thickness is approximately several mm to 10 mm. If necessary, a surface protective layer may be provided on the surface side of the light transmissive base material 4 (opposite to the pattern printing layer 5).

The pattern printing layer 5 is a layer that expresses the pattern of the printed material 2. The pattern printing layer 5 includes a first color pattern layer 10 provided on one surface 4a of the light transmissive base material 4 and a second color pattern layer 20 provided on the first color pattern layer 10.

The first color pattern layer 10 can be provided on the surface 4a by, for example, screen printing, inkjet printing, gravure printing, or offset printing. The first color pattern layer 10 is configured with a plurality of first color dots 11, as illustrated in FIG. 2. Here, "dot" means a point that is an element configuring a printed image, and its shape is not limited to circular, but can be rectangular, polygonal, or any other shape. Each of the plurality of first color dots 11 contains a first color binder 12 and a plurality of first color pigment chips 13 dispersed within the first color binder 12. The content of the plurality of first color pigment chips 13 is, for example, in the range of 0.5 parts by mass or more to 20 parts by mass or less when the content of the first color binder 12 is set to 100 parts by mass.

Examples of the first color binder 12 include vinyl resins, acrylic resins, thermoplastic urethane resins, polyester resins, polycarbonate resins, and the like. The thickness of the first color pattern layer 10 is, for example, 1 µm to 10 µm. The first color pattern layer 10 may contain a hardener. In this case, the heat resistance of the first color pattern layer 10 and the adhesiveness of the first color pattern layer 10 to the light transmissive base material 4 can be improved. The first color pattern layer 10 may also contain a weathering agent. As the weathering agent, known ultraviolet absorbers and light stabilizers can be used.

In Example 1-1, the plurality of first color pigment chips 13 are first interference pigments 14a and 14b of a plurality of colors which generate different interference light beams. Each of the first interference pigments 14a and 14b is configured with visible light transmissive flakes (not shown) and a metal oxide film (not shown) coating the flakes. In incident light on the first color pattern layer 10 from the light transmissive base material 4 side, light that is reflected on the surface of the metal oxide film and light that passes through the metal oxide film and is reflected on the surface of the flakes interfere with each other, thereby generating interference light. It is possible to generate interference light with a desired wavelength by adjusting the film thickness of the metal oxide film and the refractive index of the metal oxide film.

In Example 1-1, each of the first interference pigments 14a and 14b is titanium dioxide coated mica. The particle size range of the titanium dioxide coated mica includes, for example, a range from 25 µm to 60 µm. Here, "particle size" means the longest diameter of a particle cross-section. The flakes configuring the first interference pigments 14a and 14b may be other than mica, for example, silica, alumina, glass, or polysilicate. The metal oxide film configuring the first interference pigments 14a and 14b may be other than titanium dioxide, for example, zirconium oxide, zinc oxide, iron oxide, or tin oxide.

When incident light E is incident on the first color pattern layer 10, first interference light beams 15a and 15b, which are different from each other, are generated from the first interference pigments 14a and 14b, respectively. That is, the wavelengths of the first interference light beams 15a and 15b are different from each other. Thereby, the first interference pigments 14a and 14b exhibit a mixed color. The first interference pigments 14a and 14b are, for example, a red interference pigment (red pearl pigment) and a gold interference pigment (gold pearl pigment), respectively. In this case, the first interference light beams 15a and 15b exhibit red and gold colors, respectively. The respective compounding amounts of the first interference pigments 14a and 14b may be the same as or different from each other.

The second color pattern layer 20 can be provided on the first color pattern layer 10 by, for example, screen printing, inkjet printing, gravure printing, or offset printing. The second color pattern layer 20 is configured with a plurality of second color dots 21, as illustrated in FIG. 2. Here, "dot" means a point that is an element configuring a printed image, and its shape is not limited to circular, but can be rectangular, polygonal, or any other shape. Each of the plurality of second color dots 21 contains a second color binder 22 and a plurality of second color pigment chips 23 dispersed within the second color binder 22. The content of the plurality of second color pigment chips 23 is, for example, in the range of 0.5 parts by mass or more to 20 parts by mass or less when the content of the second color binder 22 is set to 100 parts by mass.

Examples of the second color binder 22 include vinyl resins, acrylic resins, thermoplastic urethane resins, polyester resins, polycarbonate resins, and the like. The thickness of the second color pattern layer 20 is, for example, 1 µm to 10 µm. The second color pattern layer 20 may contain a hardener. In this case, the heat resistance of the second color pattern layer 20 and the adhesiveness of the second color pattern layer 20 to the first color pattern layer 10 can be improved. The second color pattern layer 20 may also contain a weathering agent. As the weathering agent, known ultraviolet absorbers and light stabilizers can be used.

In Example 1-1, the plurality of second color pigment chips 23 are second interference pigments 24 that generate interference light of a monochromatic color different from the mixed color exhibited by the first interference pigments 14a and 14b. The second interference pigment 24 is configured with visible light transmissive flakes (not shown) and a metal oxide film (not shown) coating the flakes. In incident light on the second color pattern layer 20 from the light transmissive base material 4 side, light that is reflected on the surface of the metal oxide film and light that passes through the metal oxide film and is reflected on the surface of the flakes interfere with each other, thereby generating interference light. It is possible to generate interference light with a desired wavelength by adjusting the film thickness of the metal oxide film and the refractive index of the metal oxide film.

In Example 1-1, the second interference pigment 24 is titanium dioxide coated mica. The particle size range of the titanium dioxide coated mica includes, for example, a range from 25 µm to 60 µm. Here, "particle size" means the longest diameter of a particle cross-section. The flakes configuring the second interference pigment 24 may be other than mica, for example, silica, alumina, glass, or polysilicate. The metal oxide film configuring the second interference pigment 24 may be other than titanium dioxide, for example, zirconium oxide, zinc oxide, iron oxide, or tin oxide.

When incident light E is incident on the second color pattern layer 20, monochromatic second interference light 25 is generated from the second interference pigment 24. Thereby, the second interference pigment 24 exhibits a monochromatic color. The second interference pigment 24 may be any interference pigment that generates the second interference light 25 of a monochromatic color different from the mixed color exhibited by the first interference pigments 14a and 14b, for example, a green interference pigment (green pearl pigment). In this case, the second interference light 25 exhibits a green color.

The transmissive smoke printing layer 30 functions to attenuate light from the viewpoint front side that passes through the printed material 2. The transmissive smoke printing layer 30 is provided on an outermost surface on a side opposite to the light transmissive base material 4 with respect to the pattern printing layer 5. In Example 1-1, the transmissive smoke printing layer 30 is provided on the second color pattern layer 20, as illustrated in FIG. 1. The transmissive smoke printing layer 30 can be provided on the second color pattern layer 20 by, for example, screen printing, inkjet printing, gravure printing, or offset printing using an ink with a small amount of carbon black dispersed in a resin binder of, such as vinyl, acrylic, urethane, or polyester. The thickness of the transmissive smoke printing layer 30 is, for example, 1 µm to 10 µm. The transmissive smoke printing layer 30 may contain a curing agent. In this case, the heat resistance of the transmissive smoke printing layer 30 and the adhesiveness of the transmissive smoke printing layer 30 to the second color pattern layer 20 can be improved. The transmissive smoke printing layer 30 may also contain a weathering agent. As the weathering agent, known ultraviolet absorbers and light stabilizers can be used.

In the printed material 2, a pattern is expressed by additive color mixing of the first interference light beams 15a and 15b generated by the first interference pigments 14a and 14b and the second interference light 25 generated by the second interference pigment 24.

The total light transmittance of the printed material 2 is, for example, 30% to 70%. The "total light transmittance" mentioned here means a value obtained by measuring a total light transmittance using a spectrophotometer (for example, a spectrophotometer UV-2100 manufactured by Shimadzu Corporation).

In the printed material 2 according to Example 1-1 described above, the first color pattern layer 10 contains the first interference pigments 14a and 14b, and the second color pattern layer 20 contains the second interference pigment 24, and thus a pattern expression with a three-dimensional effect can be achieved even with a small number of printing layers. Furthermore, in the printed material 2, only the first color pattern layer 10 out of the first color pattern layer 10 and the second color pattern layer 20 is a pattern layer containing interference pigments that generate different interference light beams, and thus it is possible to simplify color mixing and registration work at the time of printing. Thus, according to the printed material 2, it is possible to express a pattern with a three-dimensional effect even with a small number of printing layers and simplify color mixing and registration work at the time of printing.

In Example 1-1, the printed material 2 includes the transmissive smoke printing layer 30 provided on the second color pattern layer 20. Thereby, color development of the first color pattern layer 10 and the second color pattern layer 20 is more excellent. Furthermore, since the transmissive smoke printing layer 30 has transparency, a decrease in the visibility of an image on the display device 1 is well curbed.

In Example 1-1, each of the first interference pigments 14a and 14b and the second interference pigment 24 contains titanium dioxide coated mica with a particle size of 25 µm or more and 60 µm or less. When the first interference pigment contains titanium dioxide coated mica with a particle size of 25 µm or more, the transparency and color development of the pattern printing layer 5 can be improved. When the first interference pigment contains titanium dioxide coated mica with a particle size of 60 µm or less, it is possible to prevent the resolution and gradation of the pattern printing layer 5 from being reduced.

In Example 1-1, the content of the plurality of first color pigment chips 13 is in the range of 0.5 parts by mass or more to 20 parts by mass or less when the content of the first color binder 12 is set to 100 parts by mass, and the content of the plurality of second color pigment chips 23 is in the range of 0.5 parts by mass or more to 20 parts by mass or less when the content of the second color binder is set to 100 parts by mass. Since the content of the plurality of first color pigment chips 13 is in the range of 0.5 parts by mass or more, the pattern on the first color pattern layer 10 is well expressed. Since the content of the plurality of first color pigment chips 13 is in the range of 20 parts by mass or less, the coating film property and transparency of the first color pattern layer 10 can be prevented from deteriorating. Similarly, since the content of the plurality of second color pigment chips 23 is in the range of 0.5 parts by mass or more to 20 parts by mass or less when the second color binder 22 is 100 parts by mass, the pattern on the second color pattern layer 20 is well expressed, and the coating film property and transparency of the second color pattern layer 20 can be prevented from deteriorating.

In Example 1-1, the total light transmittance of the printed material 2 is 30% to 70%. When the total light transmittance is 30% or more and the printed material 2 is placed in front of a screen, the pattern printing layer 5 is hardly visually recognized due to light of an image on the screen, and the image is visually recognized more clearly. When the total light transmittance is 70% or less, it is possible to prevent the pattern on the pattern printing layer 5 from appearing dark even when the screen is black.

In Example 1-1, the display device 1 includes the printed material 2 and the light source 3. According to the display device 1, when the light source 3 is not turned on, the pattern on the pattern printing layer 5 is visually recognized, and when the light source 3 is turned on, transmitted light (pattern display, image display, or the like) from the light source 3 is visually recognized.

In Example 1-1, the light source 3 may be a display device. In this case, when the display is not turned on, the pattern on the pattern printing layer 5 is visually recognized, and when the display is turned on, transmitted light (pattern display, image display, or the like) from the display is visually recognized.

As described above, the plurality of interference pigments 14a,14b, and 24 may contain pearl pigments. That is, the pattern printing layer 5 may contain a plurality of interference pearl pigments (interference pigments 14a, 14b, and 24) that differ from each other. Thus, printed material 2 is a printed material 2 including a light transmissive base material 4 and a pattern printing layer 5, and the pattern printing layer 5 may contain a plurality of interference pearl pigments. Thereby, the pattern printing layer 5 can be expressed with a three-dimensional effect.

The pattern printing layer 5 may include a first color pattern layer 10 containing interference pearl pigments and a second color pattern layer 20 containing interference pearl pigments. Thereby, the pattern printing layer 5 can be expressed with a more three-dimensional effect.

Each of the first color pattern layer 10 and the second color pattern layer 20 may contain a plurality of interference pearl pigments. Thereby, the pattern printing layer 5 can be expressed with a more three-dimensional effect. For example, the second color pattern layer 20 may contain other interference pearl pigments in addition to the interference pigments 24.

The particle sizes of the plurality of interference pearl pigments may differ from each other. In this manner, a decrease in the transparency of the pattern printing layer 5 is curbed by including interference pearl pigments with large and small particle sizes.

The particle sizes of the plurality of interference pearl pigments may be equal to or greater than 25 µm and equal to or less than 60 µm. In this case, the color development of the pattern on the pattern printing layer 5 can be made more excellent. An unnecessary reduction in the transparency of the pattern printing layer 5 is curbed, and when a display device is used, the visibility of an image on the display device can be improved.

Interference pearl pigments may contain titanium dioxide coated mica. In this case, the wavelength of interference light can be adjusted by adjusting the film thickness of the titanium dioxide film. It is possible to improve a brightness feeling by enhancing the smoothness of the mica surface.

The effect of the pattern printing layer 5 containing a plurality of interference pearl pigments can be obtained not only in Example 1 but also in Examples 2 to 6 to be described below.

### [Example 1-2]

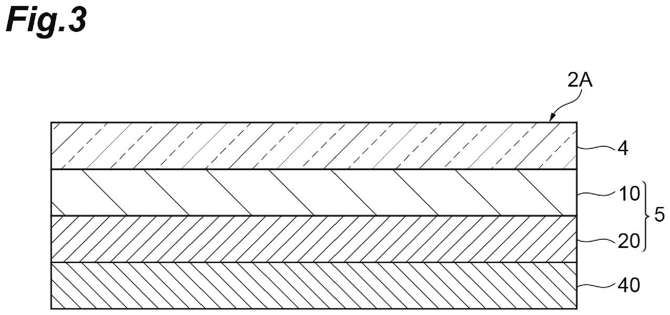

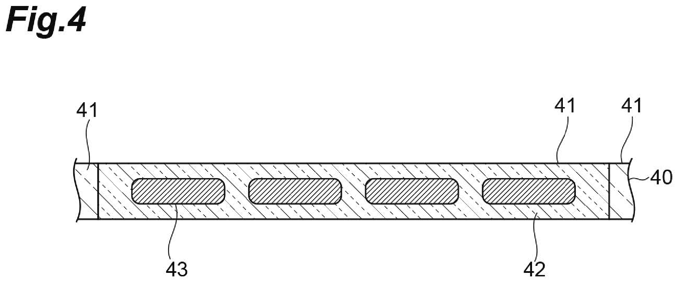

In the following, a printed material 2A according to Example 1-2 will be described with reference to FIGS. 3 and 4. In the description of Example 1-2, descriptions that overlap with Example 1-1 above will be omitted, and parts that differ from Example 1-1 above will be described. That is, the description of Example 1-1 above may be appropriately applied to Example 1-2 to the extent technically possible.

FIG. 3 is a cross-sectional view schematically illustrating a printed material according to Example 1-2. FIG. 4 is a cross-sectional view schematically illustrating a white pattern layer provided in the printed material illustrated in FIG. 3. The printed material 2A includes a light transmissive base material 4 and a pattern printing layer 5. The printed material 2A further includes a white pattern layer 40 provided on the second color pattern layer 20.

The white pattern layer 40 can be provided on the second color pattern layer 20 by, for example, screen printing, inkjet printing, gravure printing, or offset printing. The white pattern layer 40 is configured with a plurality of silver dots 41, as illustrated in FIG. 4. Here, "dot" means a point that is an element configuring a printed image, and its shape is not limited to circular, but can be rectangular, polygonal, or any other shape. Each of the plurality of silver dots 41 contains a silver binder 42 and a plurality of silver pigment chips 43 dispersed within the silver binder 42. The content of the plurality of silver pigment chips 43 is, for example, in the range of 0.5 parts by mass or more to 20 parts by mass or less when the content of the silver binder 42 is set to 100 parts by mass.

Examples of the silver binder 42 include vinyl resins, acrylic resins, thermoplastic urethane resins, polyester resins, polycarbonate resins, and the like. The thickness of the white pattern layer 40 is, for example, 1 µm to 10 µm. The white pattern layer 40 may contain a hardener. In this case, the heat resistance of the white pattern layer 40 and the adhesiveness of the white pattern layer 40 to the second color pattern layer 20 can be improved. The white pattern layer 40 may also contain a weathering agent. As the weathering agent, known ultraviolet absorbers and light stabilizers can be used.

Even with the configuration of the printed material 2A described above, the same actions and effects as in Example 1-1 above are achieved. Furthermore, in Example 1-2, the white pattern layer 40 provided on the second color pattern layer 20 and configured with a plurality of silver dots 41 is provided, each of the plurality of silver dots 41 includes the silver binder 42 and the plurality of silver pigment chips 43 dispersed within the silver binder 42. Thereby, the first color pattern layer 10 and the second color pattern layer 20 have excellent color development, and the pattern printing layer 5 can have a pattern giving a whitish impression.

### [Example 1-3]

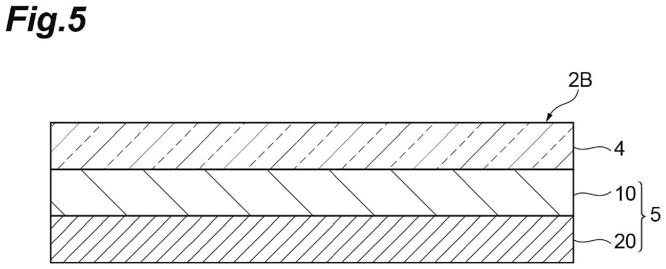

In the following, a printed material 2B according to Example 1-3 will be described with reference to FIG. 5. In the description of Example 1-3, descriptions that overlap with Examples 1-1 and 1-2 above will be omitted, and parts that differ from Examples 1-1 and 1-2 above will be described. That is, the descriptions of Examples 1-1 and 1-2 above may be appropriately applied to Example 1-3 to the extent technically possible.

FIG. 5 is a cross-sectional view schematically illustrating a printed material according to Example 1-3. The printed material 2B includes a light transmissive base material 4 and a pattern printing layer 5. That is, the printed material 2B does not include a transmissive smoke printing layer 30 and a white pattern layer 40. Even with the configuration of the printed material 2B described above, the same actions and effects as in Example 1-1 above are achieved.

### [Example 1-4]

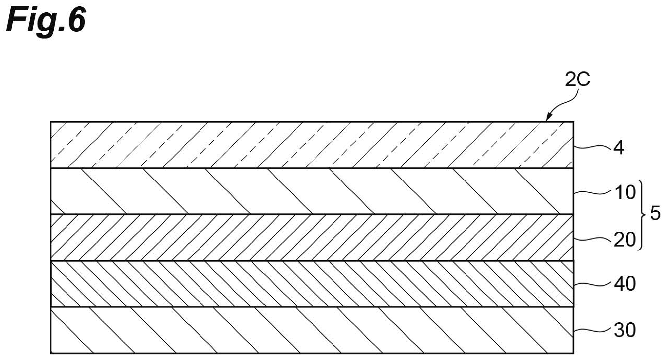

In the following, a printed material 2C according to Example 1-4 will be described with reference to FIG. 6. In the description of Examples 1-4, descriptions that overlap with Examples 1-1, 1-2, and 1-3 above will be omitted, and parts that differ from Examples 1-1, 1-2, and 1-3 above will be described. That is, the descriptions of Examples 1-1, 1-2, and 1-3 above may be appropriately applied to Example 1-4 to the extent technically possible.

FIG. 6 is a cross-sectional view schematically illustrating a printed material according to Example 1-4. A printed material 2C includes a light transmissive base material 4, a pattern printing layer 5, a white pattern layer 40, and a transmissive smoke printing layer 30. The white pattern layer 40 is provided on a second color pattern layer 20, and the transmissive smoke printing layer 30 is provided on the white pattern layer 40. Even with the configuration of the printed material 2C described above, the same actions and effects as in Examples 1-1, 1-2, and 1-3 above are achieved.

The display devices and the printed materials according to the present disclosure are not limited to the examples described above, and various other modifications can be made. For example, the second color pattern layer may contain a plurality of colors of first interference pigments that generate different first interference light beams, and the first color pattern layer may contain second interference pigments that generate monochromatic second interference light different from the mixed colors exhibited by the plurality of first interference pigments. In the above-described examples, the first color pigment chips are first interference pigments of two colors, but the first color pigment chips may be first interference pigments of three or more colors.

### [Example 2]

### [Example 2-1]

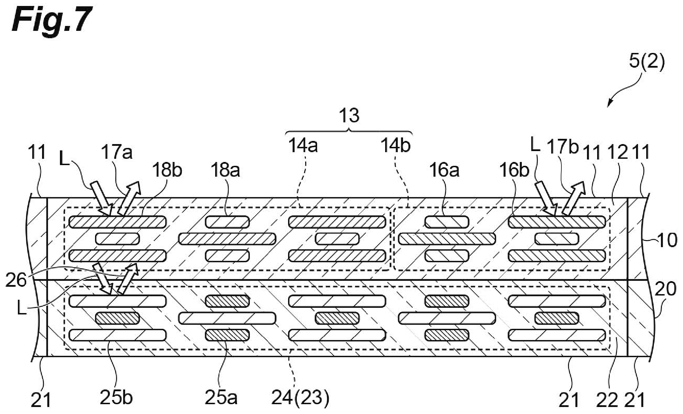

For a printed material and a display device according to this example, the same configurations as those illustrated in FIG. 1 may be adopted. Thus, in the printed material and the display device according to this example, descriptions are omitted for the same configurations as those of the printed material and display device in Example 1-1. The printed material and the display device according to Example 2-1 adopt a layer configuration illustrated in FIG. 7 instead of the layer configuration illustrated in FIG. 2.

A first interference pigment 14a includes a plurality of pieces of first titanium dioxide coated mica 18a of a small particle size grade including a particle size range of 5 µm to 25 µm and second titanium dioxide coated mica 18b of a large particle size grade including a particle size range of 25 µm to 40 µm. A first interference pigment 14b includes a plurality of pieces of first titanium dioxide coated mica 16a of a small particle size grade including a particle size range of 5 µm to 25 µm and a plurality of pieces of second titanium dioxide coated mica 16b of a large particle size grade including a particle size range of 25 µm to 40 µm. An average particle size (D50) of the first titanium dioxide coated mica 18a and 16a is, for example, approximately 15 µm, and an average particle size (D50) of the second titanium dioxide coated mica 18b and 16b is, for example, approximately 25 µm. Thereby, the average particle size of the first titanium dioxide coated mica 18a and 16a is smaller than that of the second titanium dioxide coated mica 18b and 16b. The second titanium dioxide coated mica 18b and 16b may include a particle size range of 25 µm to 60 µm. In this case, the average particle size (D50) of the second titanium dioxide coated mica 18b and 16b is, for example, approximately 35 µm. Each of the plurality of pieces of first titanium dioxide coated mica 18a and 16a is disposed to fill gaps between the plurality of pieces of second titanium dioxide coated mica 18b and 16b, as illustrated in FIG. 7. Here, "particle size" means the longest diameter of a particle cross-section.

When incident light L is incident on the first color pattern layer 10, first interference light beams 17a and 17b that are different from each other are generated from the first interference pigments 14a and 14b, respectively. That is, the wavelengths of the first interference light beams 17a and 17b are different from each other. Thereby, the first interference pigments 14a and 14b exhibit a mixed color. Each of the first interference pigments 14a and 14b may be, for example, a red interference pigment (red pearl pigment) and a gold interference pigment (gold pearl pigment). In this case, the first interference light beams 17a and 17b shows red and gold colors, respectively. The first interference pigments 14a and 14b may be interference pigments of other colors. The respective compounding amounts of the first interference pigments 14a and 14b may be the same as or different from each other.

For the second color pattern layer 20, the same configurations as those in Example 1 may be adopted.

A second interference pigment 24 includes a plurality of pieces of first titanium dioxide coated mica 25a of a small particle size grade including a particle size range of 5 µm to 25 µm and second titanium dioxide coated mica 25b of a large particle size grade including a particle size range of 25 µm to 40 µm. An average particle size (D50) of the first titanium dioxide coated mica 25a is, for example, approximately 15 µm, and an average particle size (D50) of the second titanium dioxide coated mica 25b is, for example, approximately 25 µm. Thereby, the average particle size of the first titanium dioxide coated mica 25a is smaller than that of the second titanium dioxide coated mica 25b. The second titanium dioxide coated mica 25b may include a particle size range of 25 µm to 60 µm. In this case, the average particle size (D50) of the second titanium dioxide coated mica 25b is, for example, approximately 35 µm. Each of the plurality of pieces of first titanium dioxide coated mica 25a is disposed to fill gaps between the plurality of pieces of second titanium dioxide coated mica 25b. Here, "particle size" means the longest diameter of a particle cross-section.

When incident light L is incident on the second color pattern layer 20, second interference light 26 of a monochromatic color is generated from the second interference pigment 24. Thereby, the second interference pigment 24 exhibits a monochromatic color. The second interference pigment 24 may be any interference pigment that generates the second interference light beam 26 of a monochromatic color different from the mixed color exhibited by the first interference pigments 14a and 14b, for example, a green interference pigment (green pearl pigment). In this case, the second interference light 26 exhibits a green color. The second interference pigment 24 may be an interference pigment of a color other than green.

The transmissive smoke printing layer 30 is a layer for attenuating light transmitted through the printed material 2. The transmissive smoke printing layer 30 is provided on an outermost surface on a side opposite to the light transmissive base material 4 with respect to the pattern printing layer 5. In Example 2-1, the transmissive smoke printing layer 30 is provided on the second color pattern layer 20, as illustrated in FIG. 1. The transmissive smoke printing layer 30 can be provided on the second color pattern layer 20 by, for example, screen printing, inkjet printing, gravure printing, or offset printing using an ink with a small amount of carbon black dispersed in a resin binder of, such as vinyl, acrylic, urethane, or polyester. The thickness of the transmissive smoke printing layer 30 is, for example, 1 µm to 10 µm. The transmissive smoke printing layer 30 may contain a curing agent. In this case, the heat resistance of the transmissive smoke printing layer 30 and the adhesiveness of the transmissive smoke printing layer 30 to the second color pattern layer 20 can be improved. The transmissive smoke printing layer 30 may also contain a weathering agent. As the weathering agent, known ultraviolet absorbers and light stabilizers can be used.

In the printed material 2, a pattern is expressed by additive color mixing of the first interference light beams 17a and 17b generated by the first interference pigments 14a and 14b and the second interference light 26 generated by the second interference pigment 24.

The total light transmittance of the printed material 2 is, for example, 30% to 70%. The "total light transmittance" mentioned here means a value obtained by measuring a total light transmittance using a spectrophotometer (for example, a spectrophotometer UV-2100 manufactured by Shimadzu Corporation).

In the printed material 2 according to Example 2-1 described above, the first color pattern layer 10 is configured such that each of the plurality of pieces of first titanium dioxide coated mica 18a and 16a of a small particle size grade including a particle size range of 5 µm to 25 µm is disposed to fill gaps between the plurality of pieces of second titanium dioxide coated mica 18b and 16b of a large particle size grade including a particle size range of 25 µm to 40 µm. In the printed material 2, the second color pattern layer 20 is configured such that each of the plurality of pieces of first titanium dioxide coated mica 25a of a small particle size grade including a particle size range of 5 µm to 25 µm is disposed to fill gaps between the plurality of pieces of second titanium dioxide coated mica 25b of a large particle size grade including a particle size range of 25 µm to 40 µm. For this reason, according to the printed material 2, it is possible to provide a pattern with excellent visibility and color development. Furthermore, in the printed material 2, the first color pattern layer 10 contains the plurality of pieces of second titanium dioxide coated mica 18b and 16b of a large particle size grade, and the second color pattern layer 20 contains the second titanium dioxide coated mica 25b of a large particle size grade, thereby curbing a decrease in the transparency of the pattern printing layer 5. Thus, according to the printed material 2, a decrease in the visibility of an image on the display device is well curbed when the power supply is turned on.

In Example 2-1, the plurality of pieces of second titanium dioxide coated mica 18b, 16b, and 25b of a large particle size grade may be configured to include a particle size range of 25 µm to 60 µm. In this case, the color development of a pattern is more excellent. An unnecessary reduction in the transparency of the pattern printing layer 5 is curbed, and when the display device 1 is used, the visibility of an image on the display device can be improved.

In Example 2-1, the first interference pigments 14a and 14b and the second interference pigment 24 are interference pigments containing titanium dioxide coated mica. For this reason, the wavelength of interference light can be adjusted by adjusting the film thickness of the titanium dioxide film. It is possible to improve a brightness feeling by enhancing the smoothness of the mica surface.

Also in Example 2, the configurations according to Examples 1-2 to 1-4 in Example 1 may be adopted.

In the above-described examples, each of the first interference pigment and the second interference pigment contains a plurality of pieces of first titanium dioxide coated mica and a plurality of second titanium dioxide coated mica, but at least one of the first interference pigment and the second interference pigment may contain a plurality of pieces of first titanium dioxide coated mica and a plurality of second titanium dioxide coated mica. In the above-described examples, the first color pigment chips are first interference pigments of two colors, but the first color pigment chips may be first interference pigments of three or more colors. First interference pigments of a plurality of colors may be mixed together.

### [Experimental Example]

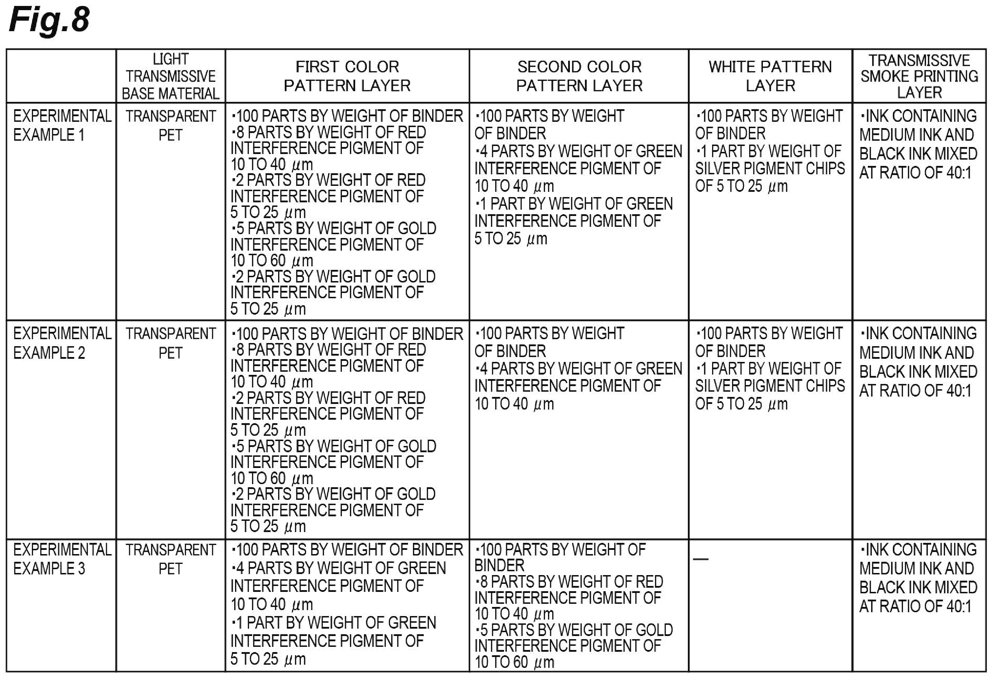

Here, an experimental example is used to describe the tendency in appearance of an image and a pattern on a liquid crystal monitor according to the particle size of titanium dioxide coated mica in a pattern printing layer. As illustrated in FIG. 8 and Experimental Examples 1 to 3 to be described below, printed materials were produced by adjusting the particle size of titanium dioxide coated mica. FIG. 8 is a chart showing configurations of printed materials according to Experimental Examples 1 to 3. A liquid crystal monitor was installed on the rear face side (transmissive smoke printing layer side) of each of the printed materials according to Experimental Examples 1 to 3. A distance between the printed material and the liquid crystal monitor was set to 2 mm. Visibility in an on state of the power supply of the liquid crystal monitor and visibility in an off state thereof (items 1 to 4 to be described below) were evaluated. A sensory evaluation was performed by four people for the items 1 to 4, and an average score of rating scores was calculated.

### <Experimental Example 1>

A printed material was produced by providing a first color pattern layer, a second color pattern layer, a white pattern layer, and a transmissive smoke printing layer in this order on a transparent base material, which is transparent PET. In Experimental Example 1, the first color pattern layer was formed by screen printing technology using an ink containing a first color binder (urethane resin) and a red interference pigment and a gold interference pigment dispersed within the first color binder. As the content of the red interference pigment and the gold interference pigment, when the first color binder was set to 100 parts by mass, a red interference pigment with a particle size of 10 to 40 µm was set to 8 parts by mass, a red interference pigment with a particle size of 5 to 25 µm was set to 2 parts by mass, a gold interference pigment with a particle size of 10 to 60 µm was set to 5 parts by mass, and a gold interference pigment with a particle size of 5 to 25 µm was set to 2 parts by mass.

In Experimental Example 1, the second color pattern layer was formed by screen printing technology using an ink containing a second color binder (urethane resin) and a green interference pigment dispersed within the second color binder. As the content of the green interference pigment, when the second color binder was set to 100 parts by mass, a green interference pigment with a particle size of 10 to 40 µm was set to 4 parts by mass, and a green interference pigment with a particle size of 5 to 25 µm was set to 1 part by weight. The red interference pigment, the gold interference pigment, and the green interference pigment are all titanium dioxide coated mica.

In Experimental Example 1, a white pattern layer was formed by screen printing technology using an ink containing a silver binder (urethane resin) and silver pigment chips dispersed within the silver binder. As the content of the silver pigment chips, when the silver binder was set to 100 parts by mass, silver pigment chips with a particle size of 5 to 25 µm was set to 1 part by weight. A transmissive smoke printing layer was formed by screen printing technology using an ink containing medium ink and black ink mixed at a ratio of 40:1.

### <Experimental Example 2>

A printed material was produced by providing a first color pattern layer, a second color pattern layer, a white pattern layer, and a transmissive smoke printing layer in this order on a transparent base material which is transparent PET. In Experimental Example 2, the first color pattern layer was formed by screen printing technology using an ink containing a first color binder (urethane resin) and a red interference pigment and a gold interference pigment dispersed within the first color binder. As percentage contents of the red interference pigment and the gold interference pigment, when the first color binder was set to 100 parts by mass, a red interference pigment with a particle size of 10 to 40 µm was set to 8 parts by mass, a red interference pigment with a particle size of 5 to 25 µm was set to 2 parts by mass, a gold interference pigment with a particle size of 10 to 60 µm was set to 5 parts by mass, and a gold interference pigment with a particle size of 5 to 25 µm was set to 2 parts by mass.

In Experimental Example 2, the second color pattern layer was formed by screen printing technology using an ink containing a second color binder (urethane resin) and a green interference pigment dispersed within the second color binder. As the content of the green interference pigment, when the second color binder was set to 100 parts by mass, a green interference pigment with a particle size of 10 to 40 µm was set to 4 parts by mass. The red interference pigment, the gold interference pigment, and the green interference pigment are all titanium dioxide coated mica.

In Experimental Example 2, a white pattern layer was formed by screen printing technology using an ink containing a silver binder (urethane resin) and silver pigment chips dispersed within the silver binder. As the content of the silver pigment chips, when the silver binder was set to 100 parts by mass, silver pigment chips with a particle size of 5 to 25 µm was set to 1 part by weight. A transmissive smoke printing layer was formed by screen printing technology using an ink containing medium ink and black ink mixed at a ratio of 40:1.

### <Experimental Example 3>

A printed material was produced by providing a first color pattern layer, a second color pattern layer, and a transmissive smoke printing layer in this order on a transparent base material, which is transparent PET. In Experimental Example 3, the first color pattern layer was formed by screen printing technology using an ink containing a first color binder (urethane resin) and a green interference pigment dispersed within the first color binder. As the content of the green interference pigment, when the first color binder was set to 100 parts by mass, a green interference pigment with a particle size of 10 to 40 µm was set to 4 parts by mass, and a green interference pigment with a particle size of 5 to 25 µm was set to 1 part by weight.

In Experimental Example 3, the second color pattern layer was formed by screen printing technology using an ink containing a second color binder (urethane resin) and a red interference pigment and a gold interference pigment dispersed within the second color binder. As the content of the red interference pigment and the gold interference pigment, when the second color binder was set to 100 parts by mass, a red interference pigment with a particle size of 10 to 40 µm was set to 8 parts by mass, and a gold interference pigment with a particle size of 10 to 60 µm was set to 5 parts by mass.

In Experimental Example 3, a transmissive smoke printing layer was formed by screen printing technology using an ink containing medium ink and black ink mixed at a ratio of 40:1.

### <Item 1: Regarding Degree of Clearness of Displayed Content>

Evaluation was performed on the definition of an image and text displayed on the liquid crystal monitor when the power supply of the liquid crystal monitor was turned on.

### <Rating Scores>

5 points: The presence of a pattern is weak for the image and text displayed on the liquid crystal monitor, and the image and text appear clear.
3 points: The presence of a pattern is slightly strong for the image and text displayed on the liquid crystal monitor, and the pattern appears to slightly overlap the image and text.
1 point: The presence of a pattern is strong for the image and text displayed on the liquid crystal monitor, and the pattern appears to overlap the image and text.

### <Item 2: Regarding Brightness of Displayed Content>

Evaluation was performed on the brightness of an image and text displayed on the liquid crystal monitor when the power supply of the liquid crystal monitor was turned on.

### <Rating Scores>

5 points: The image and text displayed on the liquid crystal monitor appear bright.
3 points: The image and text displayed on the liquid crystal monitor appear slightly dark.
1 point: The image and text displayed on the liquid crystal monitor appear quite dark.

### <Item 3: Regarding Effect of Black Color of Liquid Crystal Monitor>

Evaluation was performed on the effect of a black color of the liquid crystal monitor on a pattern when the power supply of the liquid crystal monitor was turned off.

### <Rating Scores>

5 points: The black color of the liquid crystal monitor has no effect, and the pattern is fully visible.
3 points: The effect of the black color of the liquid crystal monitor is slightly recognized, and the pattern appears slightly dark and subdued (slightly high transparency).
1 point: The effect of the black color of the liquid crystal monitor is recognized, and the pattern appears quite dark and subdued (high transparency).

### <Item 4: Regarding Color Development of Pattern>

Evaluation was performed on the color development of a pattern when the power supply of the liquid crystal monitor was turned off.

### <Rating Scores>

5 points: The color development of the pattern is excellent.
3 points: The color development of the pattern is slightly weak, and the color of the pattern appears light (whitish).
1 point: The color development of the pattern is weak, and the color of the pattern appears white.

The results of the sensory evaluations of the items 1 to 4 for Experimental Examples 1 to 3 are shown in Table 1 below. The evaluation of 3 or more points for any of the items was determined to be at a level that would not pose a problem in practical use. From Experimental Example 1, it was found that the effect of the black color of the liquid crystal monitor on the pattern was quite low, and the pattern tended to be represented at a sufficiently high level of visibility. High evaluation results were obtained for the color development of the pattern and the degree of clearness and brightness of image and text display. On the other hand, from Experimental Examples 2 and 3, it was found that there is a tendency to achieve an overall favorable finish in which the effect of the black color of the liquid crystal monitor on the pattern is kept low, while the color development of the pattern and the degree of clearness and brightness of the image and text display are also generally good.

**[Table 1]**

| | Item 1 | Item 2 | Item 3 | Item 4 |
|---|---|---|---|---|
| Example 1 | 4 | 4 | 4.5 | 4 |
| Example 2 | 4.25 | 4 | 4.25 | 4 |
| Example 3 | 4.25 | 4.25 | 4 | 4.25 |

### [Example 3]

### [Example 3-1]

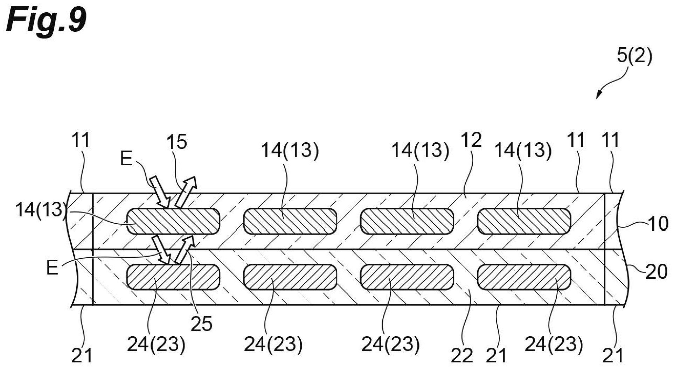

As a printed material and a display device according to this example, the same configurations as those illustrated in FIG. 1 may be adopted. Thus, in the printed material and the display device according to this example, descriptions are omitted for the same configurations as those of the printed material and display device in Example 1-1. The printed material and the display device according to this example adopt a layer configuration illustrated in FIG. 9 instead of the layer configuration illustrated in FIG. 2.

The first color pattern layer 10 can be provided on the surface 4a by, for example, screen printing, inkjet printing, gravure printing, or offset printing. The first color pattern layer 10 is configured with a plurality of first color dots 11, as illustrated in FIG. 9. Here, "dot" means a point that is an element configuring a printed image, and its shape is not limited to circular, but can be rectangular, polygonal, or any other shape. Each of the plurality of first color dots 11 contains a first color binder 12 and a plurality of first color pigment chips 13 dispersed within the first color binder 12. The content of the plurality of first color pigment chips 13 is, for example, in the range of 0.5 parts by mass or more to 20 parts by mass or less when the content of the first color binder 12 is set to 100 parts by mass. In this case, the pattern on the first color pattern layer 10 is well expressed, and the coating film property and transparency of the first color pattern layer 10 can be prevented from deteriorating.

In Example 3-1, the plurality of first color pigment chips 13 are interference pigments 14 (first interference pigments) that generate monochromatic interference light of a predetermined color. The interference pigment 14 is configured with visible light transmissive flakes (not shown) and a metal oxide film (not shown) coating the flakes. In incident light on the first color pattern layer 10 from the light transmissive base material 4 side, light that is reflected on the surface of the metal oxide film and light that passes through the metal oxide film and is reflected on the surface of the flakes interfere with each other, thereby generating interference light. It is possible to generate interference light with a desired wavelength by adjusting the film thickness of the metal oxide film and the refractive index of the metal oxide film.

When incident light E is incident on the first color pattern layer 10, monochromatic interference light 15 (first interference light) is generated from the interference pigment 14. Thereby, the interference pigment 14 exhibits a monochromatic color.

The second color pattern layer 20 can be provided on the first color pattern layer 10 by, for example, screen printing, inkjet printing, gravure printing, or offset printing. The second color pattern layer 20 is configured with a plurality of second color dots 21, as illustrated in FIG. 9. Here, "dot" means a point that is an element configuring a printed image, and its shape is not limited to circular, but can be rectangular, polygonal, or any other shape. Each of the plurality of second color dots 21 contains a second color binder 22 and a plurality of second color pigment chips 23 dispersed within the second color binder 22. The content of the plurality of second color pigment chips 23 is, for example, in the range of 0.5 parts by mass or more to 20 parts by mass or less when the content of the second color binder 22 is set to 100 parts by mass. The pattern on the second color pattern layer 20 is well expressed, and the coating film property and transparency of the second color pattern layer 20 can be prevented from deteriorating.

When incident light E is incident on the second color pattern layer 20, the second interference light 25 (second interference light) of a monochromatic color is generated from the second interference pigment 24 (second interference pigment). Thereby, the second interference pigment 24 exhibits a monochromatic color. The interference pigment 24 may be any interference pigment that generates the interference light 25 of a monochromatic color different from the color exhibited by the interference pigment 14.

The total light transmittance of the printed material 2 is, for example, 30% to 70%. The "total light transmittance" mentioned here means a value obtained by measuring a total light transmittance using a spectrophotometer (for example, a spectrophotometer UV-2100 manufactured by Shimadzu Corporation). When the total light transmittance is 30% or more and the printed material 2 is placed in front of a screen, the pattern printing layer 5 is hardly visually recognized due to light of an image on the screen, and the image is visually recognized more clearly. When the total light transmittance is 70% or less, it is possible to prevent the pattern on the pattern printing layer 5 from appearing dark even when the screen is black.

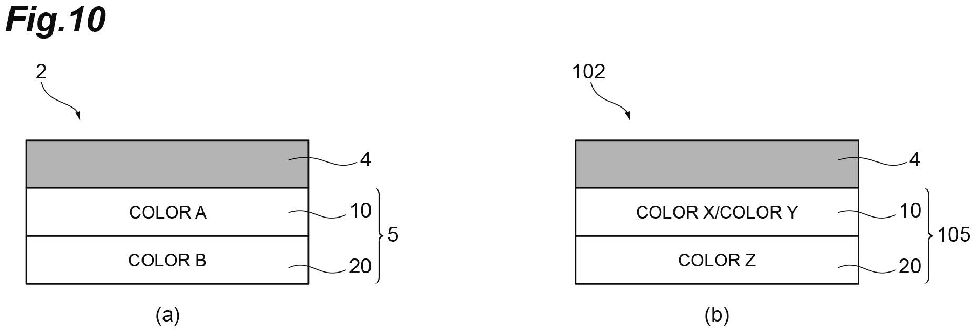

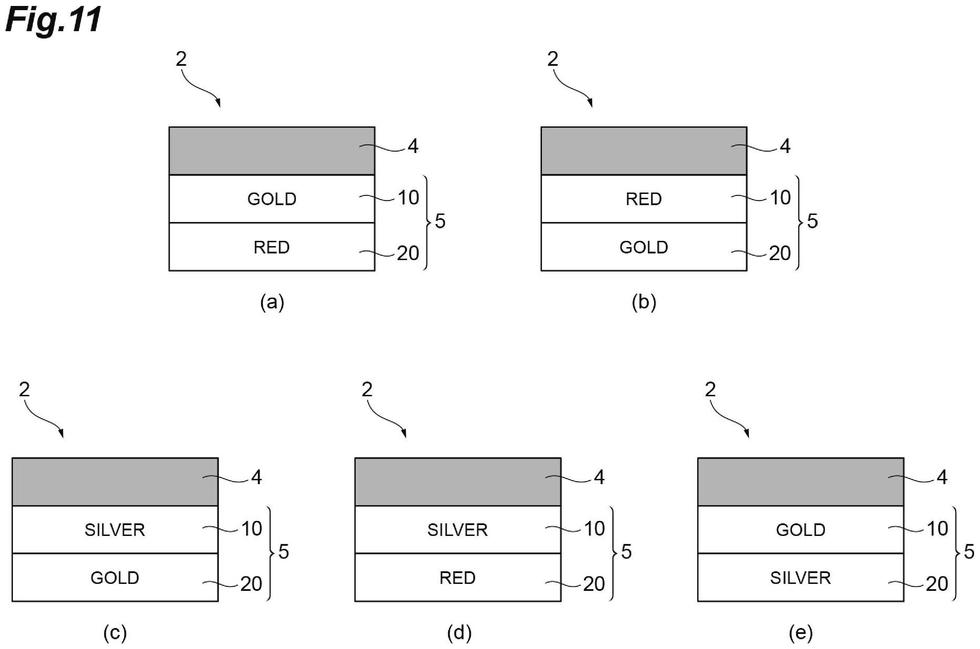

Next, color combinations in the pattern printing layer 5 will be described with reference to FIGS. 10 and 11. FIG. 10(a) is a schematic diagram illustrating a color combination of the pattern printing layer 5. FIG. 10(b) is a schematic diagram illustrating a color combination of a pattern printing layer 105 according to an example for comparison. FIG. 11 is a schematic diagram illustrating specific examples of color combinations of the pattern printing layer 5.

As illustrated in FIG. 10(a), the first color pattern layer 10 contains a monochromatic interference pigment of a "color A", thereby generating monochromatic interference light of a "color A". The second color pattern layer 20 contains an interference pigment of a monochromatic "color B", thereby generating interference light of a monochromatic "color B". The color B is a color different from the color A. For this reason, in the printed material 2, a pattern is expressed by additive color mixing of the interference light of the color A and the interference light of the color B.

In an example illustrated in FIG. 11(a), a "gold color" is adopted as the color A of the first color pattern layer 10, and a "red color" is adopted as the color B of the second color pattern layer 20. The printed material 2 may express a wood grain pattern as a pattern by additive color mixing of gold and red colors. The first color pattern layer 10 has a gold color, and thus light wood grain can be expressed. In this case, the interference pigment 14 illustrated in FIG. 9 is, for example, a gold interference pigment (gold pearl pigment). The interference light 15 exhibits a gold color. The interference pigment 24 is, for example, a red interference pigment (red pearl pigment). The interference light 25 exhibits a red color.

In an example illustrated in FIG. 11(b), a "red color" is adopted as the color A of the first color pattern layer 10, and a "gold color" is adopted as the color B of the second color pattern layer 20. The printed material 2 may express a wood grain pattern as a pattern by additive color mixing of red and gold colors. The first color pattern layer 10 has a red color to express a slightly reddish wood grain.

In an example illustrated in FIG. 11(c), a "silver color" is adopted as the color A of the first color pattern layer 10, and a "gold color" is adopted as the color B of the second color pattern layer 20. The printed material 2 may express a hairline pattern as a pattern by additive color mixing of silver and gold colors. The second color pattern layer 20 has a gold color, and thus a normal stainless steel hairline can be adjusted to a gold tone. The interference pigment 14 illustrated in FIG. 9 is, for example, a silver interference pigment (silver pearl pigment). The interference light 15 exhibits a silver color.

In an example illustrated in FIG. 11(d), a "silver color" is adopted as the color A of the first color pattern layer 10, and a "red color" is adopted as the color B of the second color pattern layer 20. The printed material 2 may express a hairline pattern as a pattern by additive color mixing of silver and red colors. The second color pattern layer 20 has a red color, and thus a stainless steel hairline can be adjusted to a bronze tone.

In an example illustrated in FIG. 11(e), a "gold color" is adopted as the color A of the first color pattern layer 10, and a "silver color" is adopted as the color B of the second color pattern layer 20. The printed material 2 may express a hairline pattern as a pattern by additive color mixing of gold and silver colors. The first color pattern layer 10 has a gold color (or a color with a gold color), and thus it is possible to achieve a finish that further emphasizes a gold tone.

In the printed material 2 according to Example 3-1 described above, the first color pattern layer 10 includes the interference pigment 14 that generates the interference light 15 of a monochromatic color, and the second color pattern layer 20 includes the interference pigment 24 that generates the interference light 25 of a monochromatic color different from the color exhibited by the interference pigment 14. Here, as an example for comparison, as illustrated in FIG. 10(b), a printed material 102 is exemplified which includes a first color pattern layer 10 containing interference pigments of a color X and a color Y and a second color pattern layer 20 containing an interference pigment of a color Z. For example, when the patterns as described with reference to FIG. 11 are expressed using the configuration of the example for comparison, it is necessary to adjust the three colors X, Y, and Z, which requires color mixing and registration work at the time of printing. On the other hand, for patterns that can be expressed with a small number of colors as illustrated in FIG. 11, the interference pigments contained in the first color pattern layer 10 and the second color pattern layer 20 are narrowed to a monochromatic color as in the printed material 2 according to this example, and thus the patterns can be expressed using only the concentration of the monochromatic color. In this manner, color mixing and registration work can be simplified at the time of printing. Thus, according to the printed material 2, it is possible to simplify the color mixing and registration work at the time of printing.

Also in Example 3, the configurations according to Examples 1-2 to 1-4 in Example 1 may be adopted.

### [Example 4]

### [Example 4-1]

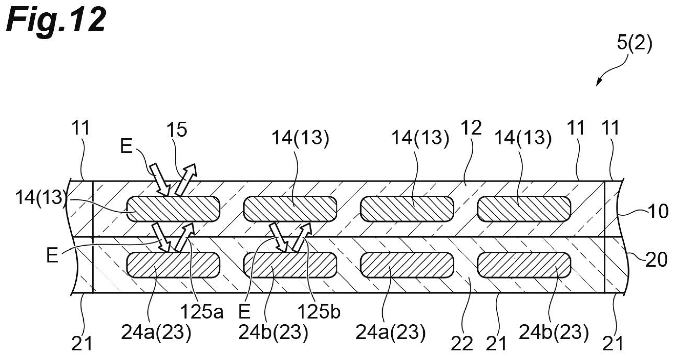

For a printed material and a display device according to this example, the same configurations as those illustrated in FIG. 1 may be adopted. Thus, in the printed material and the display device according to this example, descriptions are omitted for the same configurations as those of the printed material and display device in Example 1-1. The printed material and the display device according to this example adopt a layer configuration illustrated in FIG. 12 instead of the layer configuration illustrated in FIG. 2.

The first color pattern layer 10 can be provided on the surface 4a by, for example, screen printing, inkjet printing, gravure printing, or offset printing. The first color pattern layer 10 is configured with a plurality of first color dots 11, as illustrated in FIG. 12. Here, "dot" means a point that is an element configuring a printed image, and its shape is not limited to circular, but can be rectangular, polygonal, or any other shape. Each of the plurality of first color dots 11 contains a first color binder 12 and a plurality of first color pigment chips 13 dispersed within the first color binder 12. The content of the plurality of first color pigment chips 13 is, for example, in the range of 0.5 parts by mass or more to 20 parts by mass or less when the content of the first color binder 12 is set to 100 parts by mass. In this case, the pattern on the first color pattern layer 10 is well expressed, and the coating film property and transparency of the first color pattern layer 10 can be prevented from deteriorating.

In Example 4-1, the plurality of first color pigment chips 13 are interference pigments 14 (second interference pigments) that generate monochromatic interference light of a predetermined color. The interference pigment 14 has the same color as any of interference pigments 24a and 24b (first interference pigments) to be described below. The interference pigment 14 is configured with visible light transmissive flakes (not shown) and a metal oxide film (not shown) coating the flakes. In incident light on the first color pattern layer 10 from the light transmissive base material 4 side, light that is reflected on the surface of the metal oxide film and light that passes through the metal oxide film and is reflected on the surface of the flakes interfere with each other, thereby generating interference light. It is possible to generate interference light with a desired wavelength by adjusting the film thickness of the metal oxide film and the refractive index of the metal oxide film.

When incident light E is incident on the first color pattern layer 10, the interference light 15 (second interference light) of a monochromatic color is generated from the interference pigment 14. Thereby, the interference pigment 14 exhibits a monochromatic color.

The second color pattern layer 20 can be provided on the first color pattern layer 10 by, for example, screen printing, inkjet printing, gravure printing, or offset printing. The second color pattern layer 20 is configured with a plurality of second color dots 21, as illustrated in FIG. 12. Here, "dot" means a point that is an element configuring a printed image, and its shape is not limited to circular, but can be rectangular, polygonal, or any other shape. Each of the plurality of second color dots 21 contains a second color binder 22 and a plurality of second color pigment chips 23 dispersed within the second color binder 22. The content of the plurality of second color pigment chips 23 is, for example, in the range of 0.5 parts by mass or more to 20 parts by mass or less when the content of the second color binder 22 is set to 100 parts by mass. The pattern on the second color pattern layer 20 is well expressed, and the coating film property and transparency of the second color pattern layer 20 can be prevented from deteriorating.

In Example 4-1, the plurality of second color pigment chips 23 are the interference pigments 24a and 24b of a plurality of colors that generate different interference light beams. Each of the interference pigments 24a and 24b is configured with visible light transmissive flakes (not shown) and a metal oxide film (not shown) coating the flakes. In incident light on the second color pattern layer 20 from the light transmissive base material 4 side, light that is reflected on the surface of the metal oxide film and light that passes through the metal oxide film and is reflected on the surface of the flakes interfere with each other, thereby generating interference light. It is possible to generate interference light with a desired wavelength by adjusting the film thickness of the metal oxide film and the refractive index of the metal oxide film.

In Example 4-1, the interference pigments 24a and 24b are titanium dioxide coated mica. The particle size range of the titanium dioxide coated mica includes, for example, a range from 25 µm to 60 µm. Here, "particle size" means the longest diameter of a particle cross-section. The flakes configuring the interference pigments 24a and 24b may be other than mica, for example, silica, alumina, glass, or polysilicate. The metal oxide film configuring the interference pigments 24a and 24b may be other than titanium dioxide, for example, zirconium oxide, zinc oxide, iron oxide, or tin oxide.

When incident light E is incident on the second color pattern layer 20, interference light beams 125a and 125b (first interference light), which are different from each other, are generated from each of the interference pigments 24a and 24b. That is, the wavelengths of the interference light beams 125a and 125b are different from each other. Thereby, the interference pigments 24a and 24b exhibit a mixed color. The respective compounding amounts of the interference pigments 24a and 24b may be the same as or different from each other. The interference pigment 24a may be an interference pigment that generates the interference light 125a of a monochromatic that is the same as the monochromatic color exhibited by the interference pigment 14. The interference pigment 24b may be an interference pigment that generates the interference light beam 126b of a monochromatic color that is the same as the monochromatic color exhibited by the interference pigment 14.

The total light transmittance of the printed material 2 is, for example, 30% to 70%. The "total light transmittance" mentioned here means a value obtained by measuring a total light transmittance using a spectrophotometer (for example, a spectrophotometer UV-2100 manufactured by Shimadzu Corporation). When the total light transmittance is 30% or more and the printed material 2 is placed in front of a screen, the pattern printing layer 5 is hardly visually recognized due to light of an image on the screen, and the image is visually recognized more clearly. When the total light transmittance is 70% or less, it is possible to prevent the pattern on the pattern printing layer 5 from appearing dark even when the screen is black.

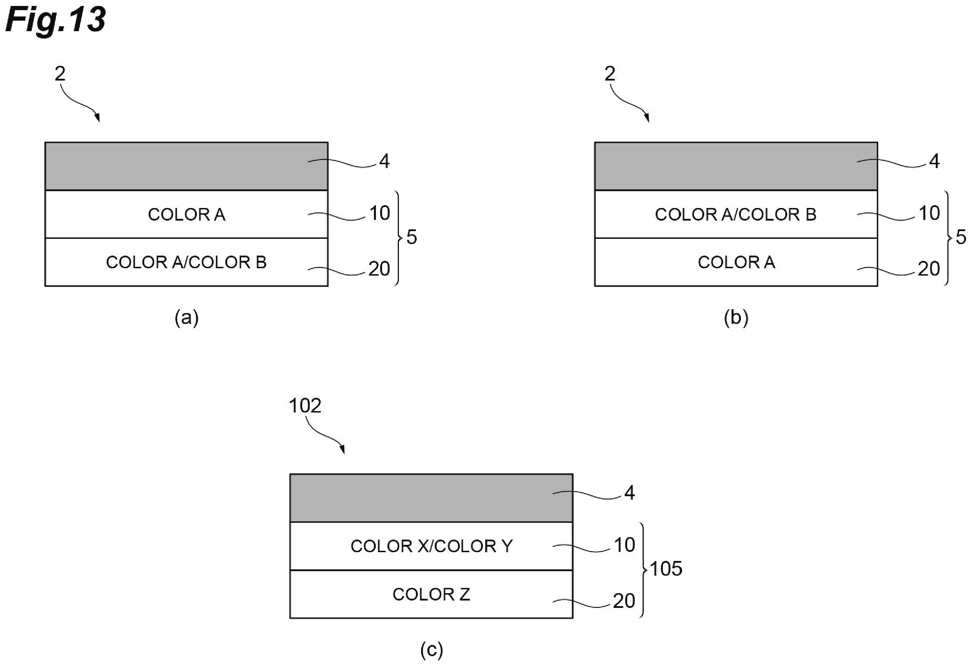

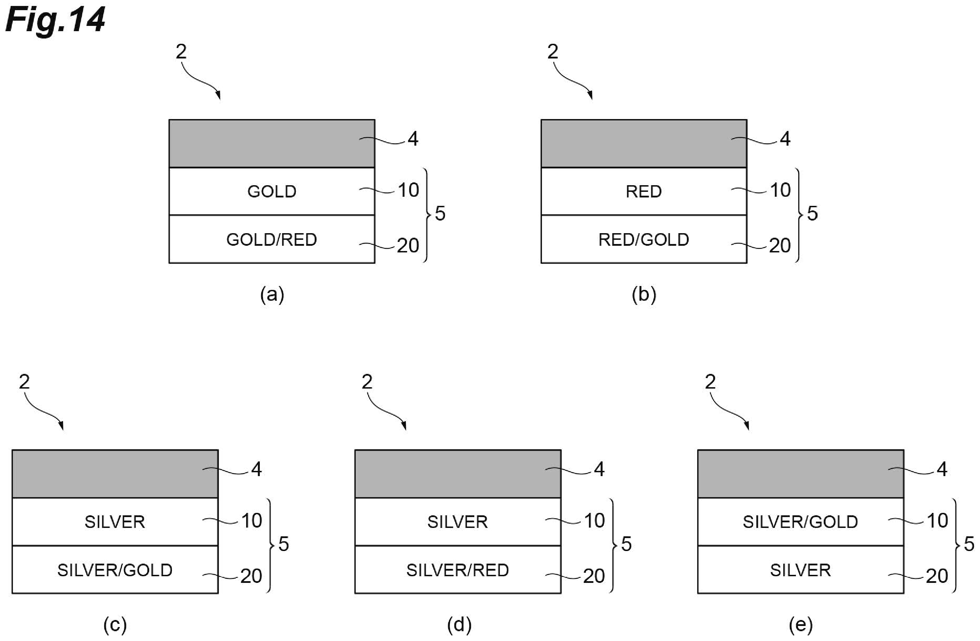

Next, color combinations in the pattern printing layer 5 will be described with reference to FIGS. 13 and 14. FIGS. 13(a) and 13(b) are schematic diagrams illustrating a color combination of the pattern printing layer 5. FIG. 13(c) is a schematic diagram illustrating a color combination of a pattern printing layer 105 according to a comparative example. FIG. 14 is a schematic diagram illustrating specific examples of color combinations of the pattern printing layer 5.

As illustrated in FIG. 13(a), the first color pattern layer 10 contains a monochromatic interference pigment of a "color A", thereby generating monochromatic interference light of a "color A". The second color pattern layer 20 contains interference pigments of a monochromatic "color A" and a monochromatic "color B", thereby generating interference light of a mixed color of the "color A" and the "color B". The color B is a color different from the color A. For this reason, in the printed material 2, a pattern is expressed by additive color mixing of the interference light of the color A and the interference light of the color A and the color B.

Alternatively, as illustrated in FIG. 13(b), the second color pattern layer 20 contains the interference pigment of the monochromatic "color A", thereby generating the interference light of the monochromatic "color A". The first color pattern layer 10 contains the interference pigments of the monochromatic "color A" and the monochromatic "color B", thereby generating interference light of a mixed color of the "color A" and the "color B". The color B is a color different from the color A. For this reason, in the printed material 2, a pattern is expressed by additive color mixing of the interference light of the color A and the interference light of the color A and the color B.

In an example illustrated in FIG. 14(a), a "gold color" is adopted as the color A of the first color pattern layer 10, and a "gold color" is adopted as the color A and a "red color" is adopted as the color B of the second color pattern layer 20. The printed material 2 may express a wood grain pattern as a pattern by additive color mixing of gold and red colors. The first color pattern layer 10 has a gold color, and thus light wood grain can be expressed. In this case, the interference pigment 14 and the interference pigment 24a illustrated in FIG. 12 are, for example, gold interference pigments (gold pearl pigments). The interference light 15 and the interference light 125a exhibit a gold color. The interference pigment 24b is, for example, a red interference pigment (red pearl pigment). The interference light 126b exhibits a red color.

In an example illustrated in FIG. 14(b), a "red color" is adopted as the color A of the first color pattern layer 10, and a "red color" is adopted as the color A and a "gold color" is adopted as the color B of the second color pattern layer 20. The printed material 2 may express a wood grain pattern as a pattern by additive color mixing of red and gold colors. The first color pattern layer 10 has a red color to express a slightly reddish wood grain.

In an example illustrated in FIG. 14(c), a "silver color" is adopted as the color A of the first color pattern layer 10, and a "silver color" is adopted as the color A and a "gold color" is adopted as the color B of the second color pattern layer 20. The printed material 2 may express a hairline pattern as a pattern by additive color mixing of silver and gold colors. The second color pattern layer 20 contains a gold color, and thus a normal stainless steel hairline can be adjusted to a gold tone. The interference pigment 14 and the interference pigment 24a illustrated in FIG. 12 are, for example, silver interference pigments (silver pearl pigments). The interference light 15 and the interference light 126a exhibit a silver color.

In an example illustrated in FIG. 14(d), a "silver color" is adopted as the color A of the first color pattern layer 10, and a "silver color" is adopted as the color A and a "red color" is adopted as the color B of the second color pattern layer 20. The printed material 2 may express a hairline pattern as a pattern by additive color mixing of silver and red colors. The second color pattern layer 20 contains a red color, and thus a stainless steel hairline can be adjusted to a bronze tone.

In an example illustrated in FIG. 14(e), a "silver color" is adopted as the color A and a "gold color" is adopted as the color B of the first color pattern layer 10, and a "silver color" is adopted as the color A of the second color pattern layer 20. The printed material 2 may express a hairline pattern as a pattern by additive color mixing of gold and silver colors. The first color pattern layer 10 contains a gold color (or a color with a gold color), and thus it is possible to achieve a finish that further emphasizes a gold tone.

In the printed material 2 according to Example 4-1 described above, one of the first color pattern layer 10 and the second color pattern layer 20 contains interference pigments of a plurality of colors that generate interference light of different colors A and B, and thus a pattern expression with a three-dimensional effect can be achieved even with a small number of printing layers. Furthermore, in the printed material 2, since only one of the first color pattern layer 10 and the second color pattern layer 20 is required as a pattern layer containing interference pigments that generate a plurality of interference light beams, color mixing and registration work at the time of printing can be simplified. On the other hand, the other of the first color pattern layer 10 and the second color pattern layer 20 contains interference pigments that generate monochromatic interference light of the color A that is the same as one of the plurality of interference pigments. Here, as a comparative example, as illustrated in FIG. 13(c), a printed material 102 is exemplified which includes a first color pattern layer 10 containing interference pigments of a color X and a color Y and a second color pattern layer 20 containing an interference pigment of a color Z. For example, the patterns as described with reference to FIG. 14 are expressed using the configuration of the comparative example, it is necessary to adjust the three colors X, Y, and Z, which requires color mixing and registration work at the time of printing. On the other hand, for patterns that can be expressed with a small number of colors as illustrated in FIG. 14, the interference pigments of the first color pattern layer 10 and the interference pigments of the second color pattern layer 20 can be narrowed to a monochromatic color of the same color A, and thus the patterns can be expressed using only the concentration of the monochromatic color A. When the color tone of the color A is to be emphasized, it is easier to adjust the color tone by using two layers, the first color pattern layer 10 and the second color pattern layer 20, than by using only one color pattern layer. When too much interference pigment is added to one color pattern layer, the strength of a coating film will decrease, but a decrease in strength can be curbed by using two color pattern layers 10 and 20. As described above, it is possible to simplify color mixing and registration work at the time of printing.

Also in Example 4, the configurations according to Examples 1-2 to 1-4 in Example 1 may be adopted.

The printed materials and the display devices are not limited to the examples described above, and various other modifications can be made.

As a printed material, a sheet having a pattern layer and a concealing layer stacked on each other may be adopted. The concealing layer is a layer that conceals the color of the display unit during non-display of an image, but displays an image transparently during display of the image. The concealing layer is set to a predetermined range of visible light transmittance. An opening is formed in the concealing layer. The concealing layer may be printed using an inkjet device, for example, white ink with titanium dioxide. Specifically, in the concealing layer, for example, white solid printing may be performed on the back face of a pattern layer. An inkjet device can be exemplified for a printing method, but this is not limiting. In addition to the inkjet printing method, various printing methods such as a gravure printing method, an offset printing method, a letterpress printing method, a flexographic printing method, a screen printing method, and an electrostatic printing method can be applied. The printing method is not limited to the printing methods exemplified above, and any image formation means known in the related art can be applied, such as a hand-drawing method, a suminagashi method, a transfer method, a photographic method, an electrophotographic method, a photosensitive resin method, a vacuum deposition method, a chemical corrosion method, a thermosensitive color development method, and a discharge destruction method. The pattern layer is formed on the surface of the concealing layer using a printing method, and is provided for the purpose of imparting design to printed materials. The pattern layer may be applied over the entire surface as long as it has some degree of light transmittance. Since the pattern layer does not require an opening like the concealing layer, it is possible to provide high-definition designs. Specifically, the pattern layer can be printed using an inkjet device, and a desired pattern can be printed using four colors of printing ink: cyan, magenta, yellow, and black, for example. Although the inkjet device is exemplified as the printing method for the pattern layer, this is not limiting, and various printing methods can be applied in the same manner as for the concealing layer. The printed material can adopt an appropriate known structure as long as it is capable of performing the above functions.

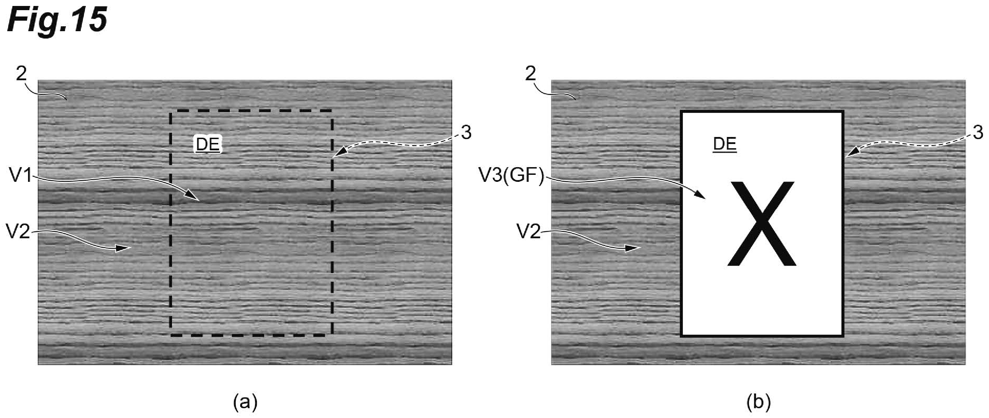

The concealment and visibility of the printed material 2 will be described in more detail with reference to FIG. 15. The description based on FIG. 15 is merely an example of a usage mode exemplified to describe the properties of the printed material 2. Thus, the present disclosure may not be limited to such a usage mode. FIGS. 15(a) and 15(b) are diagrams illustrating a front view of the light source 3 covered by the printed material 2. FIG. 15(a) illustrates a state where the power supply of the light source 3 is in an OFF state. FIG. 15(b) illustrates a state where the power supply of the light source 3 is in an ON state. A wood grain pattern is adopted here as the pattern of the printed material 2. A display unit is adopted as the light source 3. A region of the printed material 2 that covers the light source 3 is referred to as a display region DE. As illustrated in FIG. 15(a), when the power supply of the light source 3 is in an OFF state, the light source 3 is concealed by the pattern of the printed material 2. Instead of concealing the light source 3 with a light-shielding layer that shields light, the printed material 2 conceals the light source 3 by the layer itself of the light transmissive pattern. Thus, visual information V1 displayed in the display region DE is the pattern of the printed material 2. In this case, an observer cannot visually recognize a display surface (black screen) of the light source 3 and the outline of the light source 3 from the outside of the printed material 2. The visual information V1 that can be visually recognized in the display region DE and visual information V2 that can be visually recognized in a region surrounding the display region DE are the same in the pattern of the printed material 2. Thus, the observer cannot visually recognize the presence of the light source 3 from the outside of the printed material 2.

As illustrated in FIG. 15(b), when the power supply of the light source 3 is in an ON state, the light source 3 emits light and projects any image GF on the display surface. Here, the letter "X" shown in a monochromatic background is adopted as the image GF. In the display region DE, light from the image GF passes through the printed material 2. Thereby, the observer visually recognizes the image GF by visually recognizing the transmitted light in the display region DE. Thus, visual information V3 displayed in the display region DE is the image GF projected by the light source 3. The content of the visual information V3 may include information not included in the content of the visual information V1. In this case, the visual information V3 may be configured with only light transmitted through the pattern of the printed material 2.

For example, as a comparative example, a sheet that displays visual information "X" using a light source can be exemplified in which a portion of a light-shielding layer is cut out in the form of an "X" to form a light-transmitting layer (different from the printed material 2 of the present embodiment). In the visual information V3 obtained with such a sheet and a light source such as a lamp, a background portion is configured with a pattern on the surface of the light-shielding layer and the "X" portion is configured with light from the light source which is transmitted through the light-transmitting layer. Alternatively, as a comparative example, a sheet with a light-shielding layer formed in the form of an "X" on a portion of a light-transmitting layer is exemplified. In the visual information V3 obtained with such a sheet, a background portion is configured with light from a light source which is transmitted through the light-transmitting layer, and the "X" portion is configured with a pattern on the surface of the light-shielding layer. In the comparison example, the visual information V3 is configured with a combination of light transmitted through the sheet and reflected light on the sheet surface at a point where light is shielded. When the sheet as in the comparative example is used, the visual information V1 also includes a content of "X" because the sheet itself is formed in such a manner that the shape "X" is visible even when the power supply of the light source is in an OFF state. Thus, the content of the visual information V3 is already included in the visual information V1.

The visual information V3 in FIG. 15(b) using the printed material 2 differs from the sheet using the light-shielding layer as in the comparative example, and the entire visual information is configured with light transmitted through the printed material 2. Regarding the printed material 2 illustrated in FIG. 15, the entire printed material 2 may be configured with a layer that forms a light-transmissive pattern, or at least the entire display region DE may be configured with a layer that configures a light-transmissive pattern. However, even in the printed material 2, a light-shielding layer may be provided in a portion of the display region DE, or a light-shielding layer may be provided in a portion of a region other than the display region DE.

There is a display device that forms a pattern in anticipation of the content of an image of the light source 3, and forms visual information V3 by a combination of the pattern and the image when the power supply of the light source 3 is in an ON state. In the example illustrated in FIG. 15, the purpose is to make the presence of the light source 3 unrecognizable from the outside, and thus the visual information V3 in FIG. 15(b) is different from the visual information V3 formed by such a combination. However, depending on the brightness of the image and the color tone of some regions, it is acceptable for the pattern to be reflected thinly in the entirety or a portion of the visual information V3. Further, for a purpose different from that of the example illustrated in FIG. 15, a configuration may be adopted in which, as visual information V3, a pattern and an image of the printed material 2 are combined and made to operate cooperatively. When a touch panel is adopted as the light source 3, a user operates the touch panel via the printed material 2. Thus, the printed material 2 may be set to a thickness, material, and hardness that do not interfere with a touch panel operation.

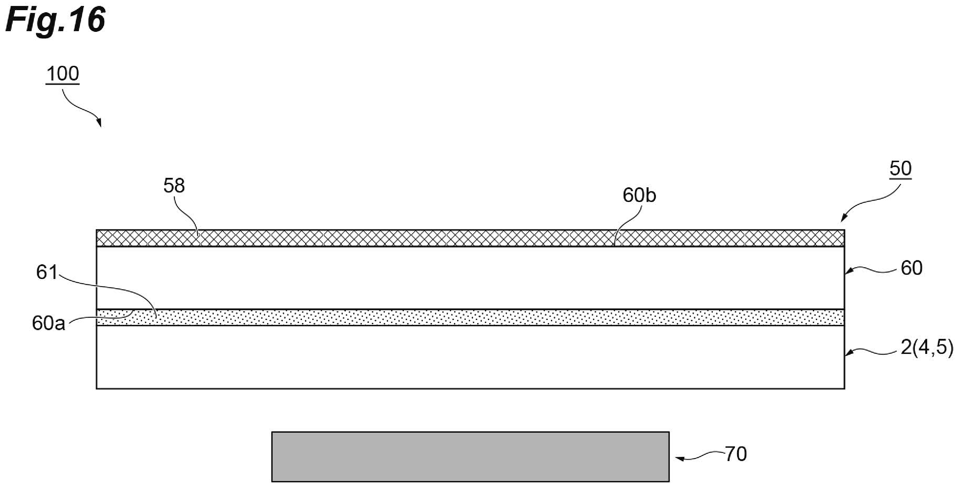

FIG. 16 is a schematic side view illustrating a display device 100 including a liquid crystal panel 50 according to the present embodiment. In the present embodiment, a case is described in which the liquid crystal panel 50 is a panel that is provided in a car navigation system and displays information such as map information. As illustrated in FIG. 16, the display device 100 includes the liquid crystal panel 50 and a display unit 70. The liquid crystal panel 50 includes a printed material 2 and a light transmissive base material 60 (light transmissive base material) for a panel. Any of the printed materials 2 described with reference to FIGS. 1 through 15 may be adopted as the printed material 2. Thus, the printed material 2 includes at least the light transmissive base material 4 and the pattern printing layer 5.

The printed material 2 is bonded to a face 60a (one face) of the light transmissive base material 60 for a panel via a bonding layer 61. Here, the face of the light transmissive base material 4 of the printed material 2 on the side opposite to the pattern printing layer 5 (see FIG. 1) is bonded to the face 60a of the light transmissive base material 60 for a panel. Thereby, the pattern printing layer 5 of the printed material 2 is provided on one face 60a side of the light transmissive base material 60 for a panel. The bonding layer 61 is configured with a light-transmissive tape or adhesive. Light-transmissive adhesives and tapes such as an OCA or an optical double-sided tape may be adopted as the bonding layer 61. The same type of material as the light transmissive base material 4 of the printed material 2 may be adopted as the type of material for the light transmissive base material 60 for a panel. The display unit 70 is disposed on the side opposite to the light transmissive base material 60 for a panel with respect to the printed material 2.

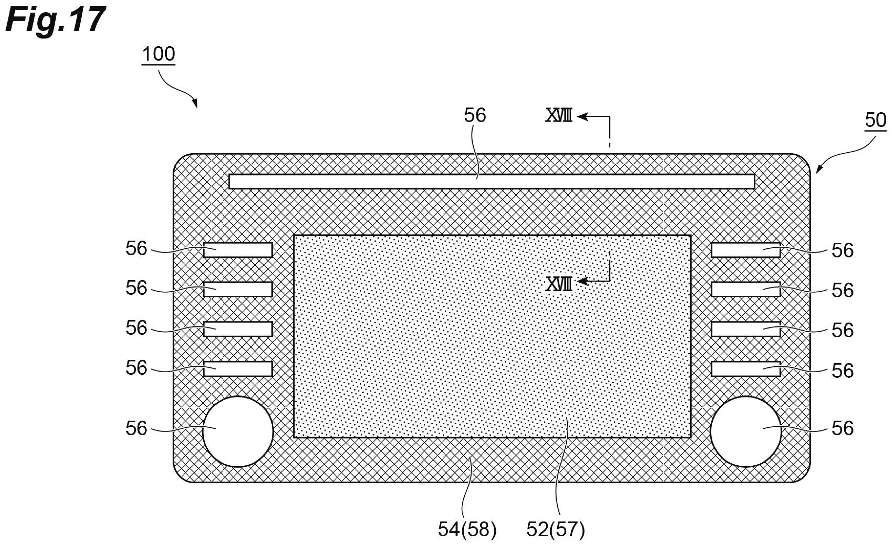

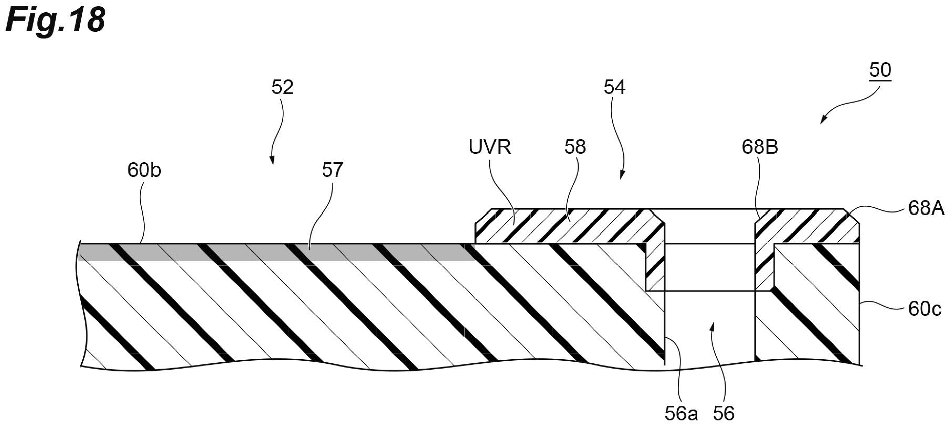

FIG. 17 is a front view illustrating the display device 100 including the liquid crystal panel 50 according to the present embodiment. FIG. 18 is an enlarged cross-sectional view taken along line XVIII-XVIII illustrated in FIG. 17. As illustrated in FIG. 17, the liquid crystal panel 50 includes a display part 52, an outer peripheral part 54, and a plurality of openings 6. The other face 60b (see FIG. 16) of the light transmissive base material 60 for a panel on the side opposite to the pattern printing layer 5 includes the display part 52 having light transmittance and the outer peripheral part 54 on the outer periphery side of the display part 52. In FIG. 17, the display part 52 is shown in a lighter color than the outer peripheral part 54.

In the present embodiment, as an example, a case is described in which the display part 52 is formed in a rectangular shape in a plan view. The "plan view" is the viewpoint of the liquid crystal panel 50 in FIG. 17, that is, the viewpoint of the liquid crystal panel 50 from the thickness direction of the liquid crystal panel 50 (plate thickness direction).

In the display part 52, a treated part 57 having been subjected to anti-glare (AG) treatment is formed. In the present embodiment, as an example, a case is described in which the anti-glare treatment is performed using a shot-blasting process. For processing conditions of the shot-blasting process, for example, glass beads are used as a projection material, a discharge pressure of the glass beads is set to 2 [kgf], and a distance from a workpiece (light transmissive base material 60 for a panel) is set to 50 [cm]. The display part 52 is formed on a portion of the light transmissive base material 60 for a panel (see FIGS. 17 and 18), which is the material for the liquid crystal panel 50.

In the present embodiment, as an example, a case is described in which the outer peripheral part 54 is configured to surround the display part 52 in a plan view in the light transmissive base material 60 for a panel. Thus, the light transmissive base material 60 for a panel includes a region for forming the display part 52 having light transmittance and a region for forming the outer peripheral part 54 disposed on the outer periphery side with respect to the display part 52 in a plan view. In a portion that forms the outer peripheral part 54 on one face of the light transmissive base material 60 for a panel, a resin layer 58 having been subjected to a stamping process using an ultraviolet curable resin (UV resin) is formed. As the ultraviolet curable resin, for example, a UV curable resin that is a light yellow transparent liquid containing an acrylic resin as a main component is used. The stamping process will be described below.

As shown in FIG. 18, an outer periphery side chamfer part 68 is formed using an ultraviolet curable resin UVR at a portion where the face 60b of the light transmissive base material 60 for a panel and an outer peripheral surface 60c of the light transmissive base material 60 for a panel are continuous. The outer periphery side chamfer part 68A is formed in the form of an R chamfer that is continuous with the face 60b of the light transmissive base material 60 for a panel and the outer peripheral surface 60c of the light transmissive base material 60 for a panel. The chamfer shape may be flat or curved.

In a plan view, the outer peripheral part 54 is marked with characters corresponding to a device or the like that uses the liquid crystal panel 50. In the present embodiment, the liquid crystal panel 50 is used as a display panel provided in a car navigation system. For this reason, examples of the characters to be printed on the outer peripheral part 54 include "POWER," "HOME," "MENU," "AUDIO," "MAP," and the like. These characters are drawn on the pattern printing layer 5 of the printed material 2 at a position corresponding to the outer peripheral part 54 in a plan view.

Each of the openings 56 is formed in the outer peripheral part 54 of the light transmissive base material 60 for a panel. The openings 56 are formed by removing portions of the light transmissive base material 60 for a panel where the openings 56 are to be formed, by punching or pressing performed after the stamping process. The openings 56 also penetrate the printed material 2.

Thus, the openings 56 penetrate the outer peripheral part 54 in the thickness direction of the light transmissive base material 60 for a panel. The openings 56 are formed at positions in the light transmissive base material 60 for a panel where switches (buttons, dials, or the like) according to the functions of the car navigation system and ports of recording mediums (optical disc and the like) having data (data such as music, images, maps, and the like) recorded thereon are disposed.

As shown in FIG. 18, an inner wall side chamfer part 68B is formed using an ultraviolet curable resin UVR at a portion where the face 60b of the light transmissive base material 60 for a panel and the inside of the opening 56 are continuous. The inner wall side chamfer part 68B is formed in the shape of an R chamfer that is continuous with the face 60b of the light transmissive base material 60 for a panel and an inner wall surface 56a of the opening 56.

### (Stamping Process Performed on Outer Peripheral Part 54)

A stamping process performed on the outer peripheral part 54 will be described. The stamping process is a process performed before removing the portion of the light transmissive base material 60 for a panel where the opening 56 is to be formed, and is a process using an ultraviolet curable resin UVR. Specifically, the ultraviolet curable resin UVR is applied to a portion of one face 60b of the light transmissive base material 60 for a panel where the outer peripheral part 54 is formed, in a state where a recess corresponding to the shape of the opening 56 is formed in a portion of the light transmissive base material 60 for a panel where the opening 56 is to be formed. Then, in a state where a mold plate having a protrusion corresponding to the shape of the opening 56 formed thereon is placed on one face 60b of the light transmissive base material 60 for a panel coated with the ultraviolet curable resin UVR, the light transmissive base material 60 for a panel is pressed against the mold plate using a roller or the like. Furthermore, the mold plate is removed from the light transmissive base material 60 for a panel, and the ultraviolet curable resin UVR applied to the light transmissive base material 60 for a panel is irradiated with ultraviolet light to cure the ultraviolet curable resin UVR. The protrusion formed on the mold plate and corresponding to the shape of the opening 56 is formed to have a shape having an R chamfer.

At this time, the ultraviolet curable resin UVR applied to the face 60b of the light transmissive base material 60 for a panel is applied not only to the face 60b of the light transmissive base material 60 for a panel, but also to the inside of the recess corresponding to the shape of the opening 56. Thus, when the portion of the light transmissive base material 60 for a panel which forms the opening 56 is removed by a process performed after the stamping process, the ultraviolet curable resin UVR that was applied to the inside of the recess corresponding to the shape of the opening 56 and cured is also removed. For this reason, the openings 56 are formed in the light transmissive base material 60 for a panel, and the inner wall side chamfer part 68B is also formed using the cured ultraviolet curable resin UVR.

The portion forming the display part 52 has an effective load roughness (Rk) in the range of 5.6 µm or more to 7.2 µm or less, and an average height (Rc) in the range of 8.0 µm or more to 10.2 µm or less. Additionally, the portion forming the display part 52 has an average roughness (Ra) in the range of 2.0 µm or more to 2.4 µm or less, and a root mean square roughness (Rq) in the range of 2.5 µm or more to 3.0 µm or less. The average height (Rc) is an average height of convex parts formed by peaks and valleys in the portion forming the display part 52. Other parameters related to the display part 52 may adopt known values as shown in, for example, Japanese Unexamined Patent Publication No. 2019-66842.

For an anti-glare treatment process, a stamping process, and a process of the opening 56, and the like for the light transmissive base material 60 for a panel, a known method as shown in, for example, Japanese Unexamined Patent Publication No. 2019-66842 may be adopted.

Next, the actions and effects of the liquid crystal panel 50 will be described.

The other face 60b of the light transmissive base material 60 for a panel on the side opposite to the pattern printing layer 5 has the display part 52 having light transmittance and the outer peripheral part 54 on the outer periphery side of the display part 52, wherein the treated part 57 having been subjected to anti-glare treatment is formed on the display part 52, and the resin layer 58 having been subjected to a stamping process using an ultraviolet curable resin is formed on the outer peripheral part 54. For this reason, since the treated part 57 having been subjected to anti-glare treatment is formed on the display part 52, it is possible to reduce external light reflection in the display part 52 and prevent reflection and the like. Additionally, since the resin layer 58 having been subjected to a stamping process using an ultraviolet curable resin is formed in the outer peripheral part 54, it is possible to curb a decrease in gloss level in the outer peripheral part 54. The pattern printing layer 5 is provided on one face 60a side of the light transmissive base material 60 for a panel and includes a pattern layer configured with a plurality of dots, each of the plurality of dots includes a binder and a plurality of pigment chips dispersed within the binder, and the plurality of pigment chips are interference pigments. In this case, the pattern printing layer 5 can conceal the display unit 70 when the display is off. Thereby, an image of the display unit 70 is displayed on the display part 52. On the other hand, the pattern printing layer 5 can conceal the presence of the display unit 70 by a pattern when the display unit 70 is turned off. For this reason, the pattern on the pattern printing layer 5 is displayed on the display part 52. As described above, the liquid crystal panel 50 can reduce external light reflection at the display part 52 during the display of the display unit 70, curb a decrease in gloss level in regions other than the display part 52, and conceal the display unit 70 during a turn-off state of the display unit 70.

In the liquid crystal panel 50, the anti-glare treatment may be performed using a shot-blasting process. Thereby, it is possible to more reduce external light reflection in the display part 52 including the treated part 57 and prevent reflection and the like.

By using the printed materials 2 of FIGS. 3 and 6 as a printed material 2, the liquid crystal panel 50 may further include the white pattern layer 40 provided on the pattern printing layer 5 and configured with a plurality of silver dots, and each of the plurality of silver dots may include the silver binder 42 and the plurality of silver pigment chips 43 dispersed within the silver binder 42. Thereby, the first color pattern layer 10 and the second color pattern layer 20 have excellent color development, and the pattern printing layer 5 can have a pattern giving a whitish impression.

By using the printed material 2 in FIG. 6 as a printed material 2, the liquid crystal panel 50 may further include the transmissive smoke printing layer 30 provided on an outermost surface on a side opposite to the light transmissive base material 60 for a panel with respect to the pattern printing layer 5. Thereby, color development of the first color pattern layer 10 and the second color pattern layer 20 is more excellent. Furthermore, since the transmissive smoke printing layer 30 has transparency, a decrease in the visibility of an image on the display device 1 is well curbed.

By using the pattern printing layers 5 illustrated in FIG. 2 and the like as a pattern printing layer 5, in the liquid crystal panel 50, the pattern layer may include the first color pattern layer 10 provided on one face 60a side of the light transmissive base material 60 and configured with a plurality of first color dots, and the second color pattern layer 20 provided on the first color pattern layer 10 and configured with a plurality of second color dots, each of the first color dots may include a first color binder and a plurality of first color pigment chips dispersed within the first color binder, each of the second color dots may include a second color binder and a plurality of second color pigment chips dispersed within the second color binder, one of the first color pigment chip and the second color pigment chip may develop a color as interference light on a reflected light side and includes interference pigments of a plurality of different colors, the other of the first color pigment chip and the second color pigment chip may develop a color as interference light on the reflected light side and include one type of interference pigment developing a color different from a mixed color exhibited by the interference pigments of the plurality of colors included in the any one of the first and second color pigment chips, and additive color mixing of the interference light may be performed. Since the first color pattern layer 10 contains the first interference pigments 14a and 14b and the second color pattern layer 20 contains the second interference pigment 24, a pattern expression with a three-dimensional effect can be achieved even with a small number of printing layers. Furthermore, in the printed material 2, only the first color pattern layer 10 out of the first color pattern layer 10 and the second color pattern layer 20 is a pattern layer containing interference pigments that generate different interference light beams, and thus color mixing and registration work at the time of printing can be simplified. Thus, according to the printed material 2, it is possible to express a pattern with a three-dimensional effect even with a small number of printing layers and simplify color mixing and registration work at the time of printing.

By adopting the pattern printing layers 5 illustrated in FIG. 9 and the like as a pattern printing layer 5, in the liquid crystal panel 50, the pattern layer may include the first color pattern layer provided on one face 60a side of the light transmissive base material 60 and configured with a plurality of first color dots, and the second color pattern layer 20 provided on the first color pattern layer 10 and configured with a plurality of second color dots, each of the first color dots may include a first color binder and a plurality of first color pigment chips dispersed within the first color binder, each of the second color dots may include a second color binder and a plurality of second color pigment chips dispersed within the second color binder, the plurality of first color pigment chips may be first interference pigments that generate monochromatic first interference light, the plurality of second color pigment chips may be second interference pigments that generate monochromatic second interference light different from the color exhibited by the first interference pigments, and the first interference light and the second interference light may be subjected to additive color mixing. For example, for a pattern that can be expressed with a small number of colors, the interference pigments contained in the first color pattern layer 10 and the second color pattern layer 20 are narrowed to a monochromatic color, and thus the pattern can be expressed using only the concentration of the monochromatic color. In this manner, color mixing and registration work can be simplified at the time of printing. Thus, according to the printed material, it is possible to simplify the color mixing and registration work at the time of printing.

By using the pattern printing layers 5 illustrated FIG. 12 and the like as a pattern printing layer 5, in the liquid crystal panel 50, the pattern layer may include the first color pattern layer 10 provided on one face 60a side of the light transmissive base material 60 and configured with a plurality of first color dots, and the second color pattern layer 20 provided on the first color pattern layer 10 and configured with a plurality of second color dots, each of the first color dots may include a first color binder and a plurality of first color pigment chips dispersed within the first color binder, each of the second color dots may include a second color binder and a plurality of second color pigment chips dispersed within the second color binder, one of the plurality of first color pigment chips and the plurality of second color pigment chips may be first interference pigments of a plurality of colors which generate different first interference light beams, the other of the plurality of first color pigment chips and the plurality of second color pigment chips may be second interference pigments generating monochromatic second interference light of the same color as one of the plurality of first interference pigments, and additive color mixing of the plurality of first interference light beams and the second interference light may be performed. Since one of the first color pattern layer 10 and the second color pattern layer 20 contains interference pigments of a plurality of colors which generate different interference light beams, a pattern expression with a three-dimensional effect can be achieved even with a small number of printing layers. Furthermore, in the liquid crystal panel 50, since only one of the first color pattern layer 10 and the second color pattern layer 20 is required as a pattern layer containing interference pigments that generate a plurality of interference light beams, color mixing and registration work at the time of printing can be simplified. On the other hand, the other of the first color pattern layer 10 and the second color pattern layer 20 contains the second interference pigments that generate monochromatic second interference light of the same color as one of the plurality of first interference pigments. For example, for a pattern that can be expressed with a small number of colors, the second interference pigments are narrowed to a monochromatic color of the same color as the first interference pigment, and thus the pattern can be expressed using the concentration of the monochromatic color. When a certain color tone is to be emphasized, it is easier to adjust the color tone by using two layers, the first color pattern layer 10 and the second color pattern layer 20, than by adjusting only one color pattern layer. When too much interference pigment is added to one color pattern layer, the strength of a coating film will decrease, but a decrease in strength can be curbed by using two color pattern layers. As described above, it is possible to simplify color mixing and registration work at the time of printing.

As one aspect, the display device 100 includes the liquid crystal panel 50 and the display unit 70.

In the display device 100, it is possible to obtain the same actions and effects as those of the liquid crystal panel 50 described above.

The present disclosure is not limited to the above-described embodiments.

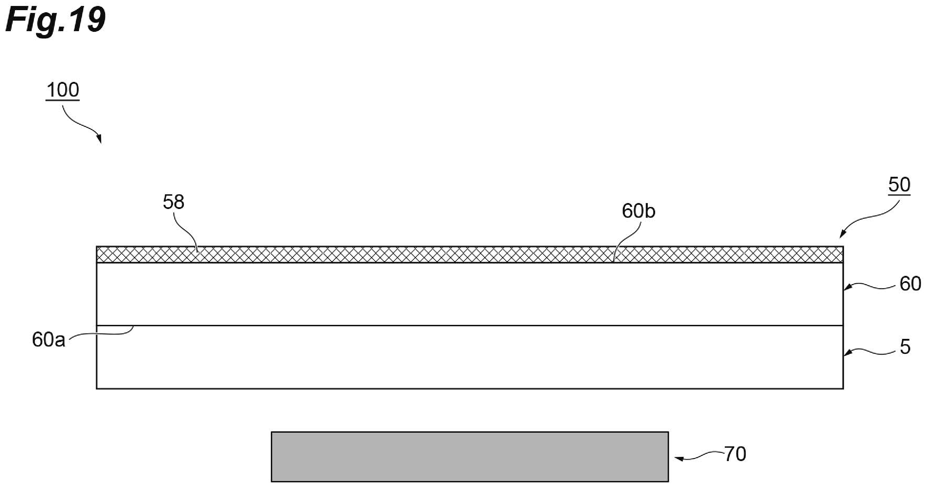

For example, a configuration as illustrated in FIG. 19 may be adopted. In an example illustrated in FIG. 19, the pattern printing layer 5 is formed directly on one face 60a of the light transmissive base material 60 for a panel. In this case, the light transmissive base material 60 for a panel simultaneously functions as the light transmissive base material 4 of the printed material 2. Any one of the pattern printing layers 5 illustrated in FIGS. 1 to 14 may be adopted as the pattern printing layer 5, and the white pattern layer 40 and the transmissive smoke printing layer 30 may be further provided.

### [Second Disclosure]

In the related art, an injection molded product formed by injecting a molten material into a light transmissive insert film is known (see, for example, Japanese Unexamined Patent Publication No. 2021-178431). The injection molded product is used for decorating center consoles. A driver can view an image displayed on a display device through the injection molded product.

Here, transparent resins such as acrylic, ABS, and polycarbonate are used for injection molding when light is transmitted. When light transmissive decoration is performed on an insert film, the light transmissive decorative insert film transmits light. When a layer that does not partially transmit light is provided below the decorative layer to form a display part, the display part can be revealed on the decorative layer by light transmitted through the display part when light is emitted from the rear face. However, even when light is not emitted from the rear face, the color tone of the decorative layer on the display part changes when light hits it from the front, which results in a problem that the display part is visible even when no display is performed. Even without providing a layer that does not transmit light, there was a problem that the overall color tone of a pattern layer becomes lighter when light hits it from the front.

An object of the present disclosure is to solve the above-described problems and to provide an injection molding method, an injection molded product, and a display device which are capable of curbing color tone changes of patterns related to decoration of light transmissive decorative insert films.

The inventors have found that, when a transparent resin is injection-molded into an insert film decorated with a visible light transmissive pattern, light transmitted from the surface of the light transmissive decorative insert film is reflected at a boundary with the air layer on the rear side of the transparent resin, and the light transmissive decorative insert film is illuminated with light from behind. Furthermore, the inventors of this application have found that such a phenomenon can cause the color tone of a pattern on the light transmissive decorative insert film to become lighter, making the pattern less clearly visible, can make the presence of a display part visible at all times due to different color tones of patterns in a portion with a concealing layer and a portion without a concealing layer, degrading the design quality, or can reduce the contrast of an image on a display unit viewed through injection molding when the display unit is installed behind an injection molded product.
[1] In the present disclosure, an injection molding method according to one aspect includes preparing a light transmissive decorative insert film having a transmittance of visible light of 10% or more and 80% or less by decorating a film, preparing a resin having a transmittance of visible light of 40% or less by adding pigments to a transparent resin, and inserting the light transmissive decorative insert film into a mold and injecting the resin into the mold to mold an injection molded product.

In this injection molding method, the resin is injection-molded in a state where the light transmissive decorative insert film is inserted into the mold. For this reason, a resin layer is formed by injection molding on the rear side of the decorated light transmissive decorative insert film with a transmittance of 10% or more and 80% or less. The resin layer formed by injection molding is a transparent resin adjusted with a pigment to achieve a transmittance of 40% or less. Thus, even when light emitted from the surface of the light transmissive decorative insert film is reflected by an air layer on the rear face of the resin layer, the reflected light is reduced. For this reason, the amount of light emitted onto the light transmissive decorative insert film from the rear side is reduced, and thus it is possible to prevent the color tone of the decorated pattern from becoming lighter. By reducing the transmittance of a resin for injection molding, the base concealment is increased, and even when a display unit is provided inside, the presence of the display unit can be concealed. It is also possible to eliminate a concealing layer or a colored layer of the light transmissive decorative insert film itself by using a smoked resin for injection molding.

[2] In the injection molding method of [1] above, the pigment may be carbon black. In this case, a moderate amount of carbon is added to the transparent resin, and thus the resin for injection molding can be formed in gray smoke with a transmittance of 40% or less.

[3] In the injection molding method of [1] or [2] above, the pigment may be an inorganic or organic coloring pigment. Thereby, it is possible to control the color tone of the light transmissive decorative insert film by coloring the smoked resin.

[4] As another aspect, the present disclosure relates to an injection molded product. The injection molded product is molded by the injection molding method described in any one of [1] to [3] above. In this case, it is possible to provide an injection molded product in which the color tone of a pattern on a light transmissive decorative insert film does not become lighter by backside reflection.

[7] The display device includes the injection molded product of [4] above and a display unit. In this case, it is possible to conceal the display unit while preventing the color tone of the pattern on the light transmissive decorative insert film from becoming lighter.

According to the present disclosure, it is possible to provide an injection molding method, an injection molded product, and a display device which are capable of curbing color tone changes of patterns related to decoration of light transmissive decorative insert films.

Specific examples of the injection molding method, the injection molded product, and the display device according to the embodiments of the present disclosure will be described below with reference to the drawings. The present disclosure is not limited to these examples, but is defined by the scope of the claims, and is intended to include all modifications within the meaning and scope equivalent to the claims. In the following description, the same elements in the drawings are denoted by the same symbols, and redundant explanations are omitted.

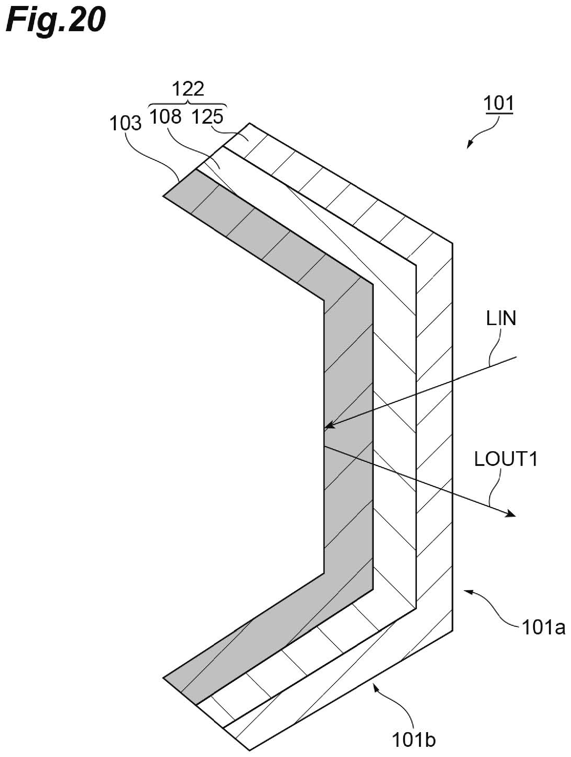

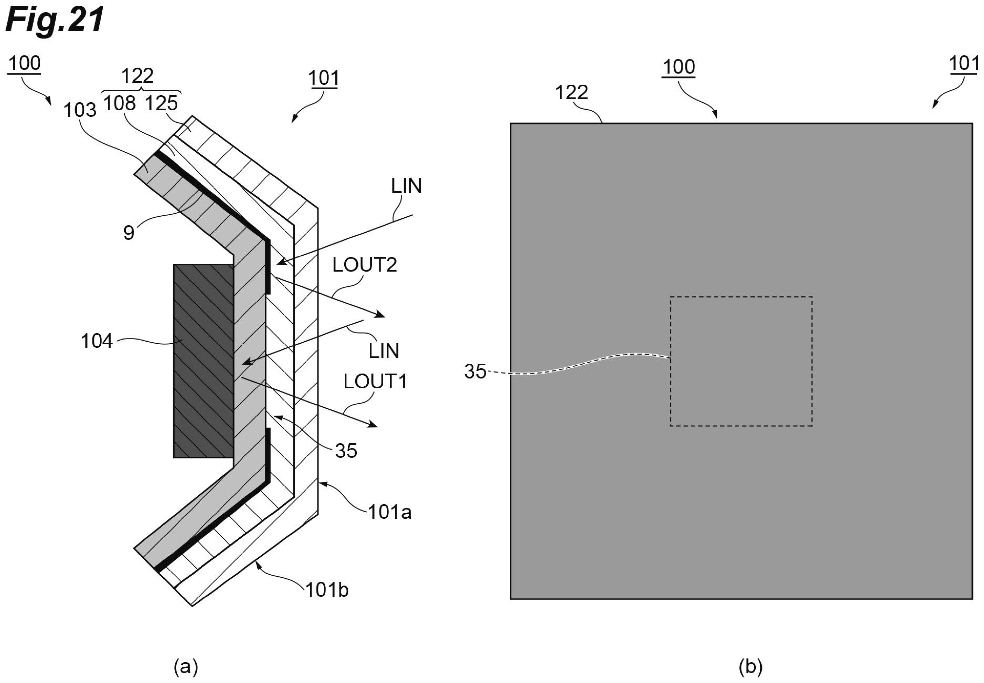

FIG. 20 is a cross-sectional view schematically illustrating an injection molded product 10101 according to an embodiment of the present disclosure. FIG. 21 is a cross-sectional view schematically illustrating a display device 100 according to the present embodiment. The injection molded product 10101 includes a light transmissive decorative insert film 122 and a resin layer 103, as illustrated in FIG. 20. The display device 100 includes an injection molded product 101 and a display unit 104, as illustrated in FIG. 21(a).

The injection molded product 101 is provided in front of the display unit 104 which is a light source (between a viewer and the display unit 104). The display device 100 is configured by concealing the display unit 104 by the injection molded product 101. The injection molded product 101 has full light transmittance. For this reason, when the power supply of the display unit 104 is in an ON state, the viewer can visually recognize light from the display unit 104 which is transmitted through the injection molded product 101, and when the power supply of the display unit 104 is in an OFF state, the viewer can visually recognize a pattern expressed by the injection molded product 101. In the injection molded product 101, an outer peripheral part 101b is bent toward the rear face side (the display unit 104 side) as it extends toward the outer periphery, the outer peripheral part 101b being provided on the periphery side with respect to a central part 101a near the center where the display unit 104 is disposed. In the present embodiment, the outer peripheral part 101b is bent to be inclined with respect to the central part 101a, but may be bent to be curved.

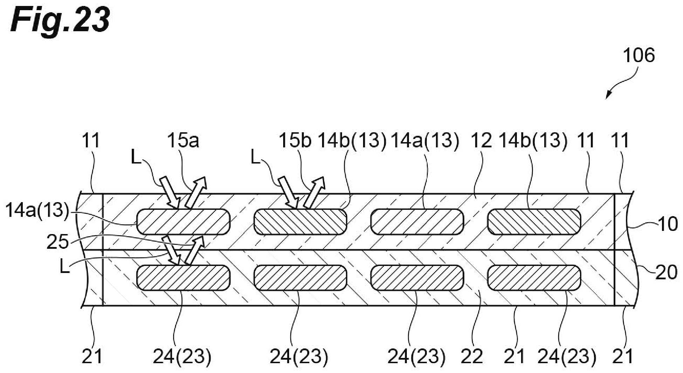

The light transmissive decorative insert film 122 is a sheet for expressing a pattern. The transmittance of visible light of the light transmissive decorative insert film 122 is preferably 10% or more and 80% or less. When the light transmissive decorative insert film 122 is not provided with a concealing layer 107 to be described below, the transmittance may be 70% or more. The light transmissive decorative insert film 122 has a transmittance of visible light of 10% or more, which allows light from the display unit (see FIG. 23) to easily pass through. The higher the transmittance of the light transmissive decorative insert film 122, the more light from the rear face can pass through, which is preferable. A transmittance in this specification means, for example, the value of a visible light transmittance measured using a spectrophotometer (for example, a spectrophotometer UV-2100 manufactured by Shimadzu Corporation).

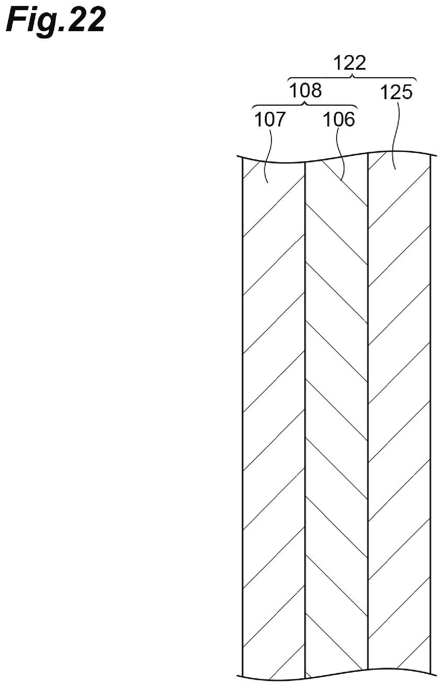

The light transmissive decorative insert film 122 includes a film 125 and a decorative printing layer 108. The light transmissive decorative insert film 122 is formed by decorating the film 125. The decorative printing layer 108 is formed by performing printing on the film 125. FIG. 22 is a cross-sectional view illustrating an example of a layer configuration of the light transmissive decorative insert film 122. As illustrated in FIG. 22, the decorative printing layer 108 may include a pattern layer 106 and a concealing layer 107. However, the structure of the light transmissive decorative insert film 122 is not particularly limited as long as it is a decorative film with light transmittance. For example, the resin layer 103 can be substituted for the concealing layer, and the concealing layer 107 itself of the light transmissive decorative insert film 122 can be eliminated. The concealing layer 107 is not a layer formed by printing, but may be a colored film with holes.

The film 125 is a visible light transmissive base material. The film 125 is a moldable material. For the film 125, a material such as acryl or acryl/polycarbonate with high moldability that does not crack or split during molding may be adopted, but the material is not particularly limited as long as it is moldable. The thickness of the film 125 is, for example, 25 µm to 250 µm. If necessary, a hard coat layer, an anti-fingerprinting layer, or an anti-reflective layer may be provided on the surface side of the film 125 (on the side opposite to the pattern layer 106). However, as a surface layer, a layer that stretches without cracking during molding is used. A functional layer on the surface side may be an after-cure type that is cured by UV exposure after molding. Printing of light transmissive decoration is performed on the rear face of the film 125 (the face on the pattern layer 106 side).

The pattern layer 106 is a layer in which a pattern expressed by the light transmissive decorative insert film 122 is formed. The pattern on the pattern layer 106 is a pattern that appears on the surface of a decorative sheet when the power supply of the display unit 104 is in an OFF state, and for example, a wood grain pattern, an abstract pattern, or the like may be adopted. The pattern layer 106 may be formed by performing printing on the film 125. Printing may be gravure printing, inkjet printing, screen printing, offset printing, or the like, and the printing method does not matter. The material of a decorative ink used for printing may be an inorganic, organic, or interference pigment, and the material does not matter. The thickness of the pattern layer 106 is, for example, 1 µm to 100 µm.

The concealing layer 107 is a layer that conceals the display unit 104 when the power supply of the display unit 104 is in an OFF state, and also determines the color tone of a pattern. When the pattern layer 106 is an interference pigment, black or gray is used for the concealing layer 107 in order to improve color development, but when a pigment such as an inorganic pigment is used, using black or gray makes it difficult to view the pattern. Thus, it is preferable to use a bright color such as white for the concealing layer 107. When the pattern is wood grain, the concealing layer 107 can be changed in color tone with a brown-based color. It is preferable to have a high transmittance with a minimum of base concealment of the concealing layer.

Since the concealing layer 107 conceals the display unit 104 together with the resin layer 103 to be described below, the concealment of the concealing layer 107 itself may be kept low. The concealing layer 107 may be formed, for example, by printing a solid layer on the pattern layer 106. For example, a solid white layer may be printed as the concealing layer 107. The solid white layer has an effect of controlling the color tone of the pattern, and preventing the pattern from appearing subdued in a black base and becoming difficult to see. The printing density of solid white printing may be reduced to achieve thin printing, thereby reducing the concealment. For example, a solid black layer may be printed as the concealing layer 107. The solid black layer has an effect of making the color development of an interference pigment more visible and concealing the base. The concealing layer of the solid black layer may be printed thinly with a low printing density to reduce the base concealment, or the concealing layer itself may be eliminated. Printing may be gravure printing, inkjet printing, screen printing, offset printing, or the like, and the printing method does not matter. A concealing layer may be further formed partially on the concealing layer 107 to provide a light transmissive portion and a non-light transmissive portion. A gradient-like change in the printing density at a boundary between the light transmissive portion and the non-light transmissive portion may be made so that there is no clear difference. The concealing layer 107 may be a layer formed by printing, a colored film, or a colored sheet. In the same manner, a concealing layer may be further formed partially on the resin layer 103.

The resin layer 103 serves in place of a colored base film that determines the color tones of the concealing layer and the pattern, and thus the concealing layer and the color solid layer for controlling the color tone may be eliminated from the configuration of the light transmissive decorative insert film 122. The concealing layer 107 may be formed by laminating a colored film instead of by printing. The thinner the film thickness of the colored film, the higher the light transmittance of the colored film. A topcoat layer may be provided on the surface of the light transmissive decorative insert film 122. The surface of the film 125 may be subjected to an embossing process. Printing may be either front or back printing.

Here, an example of a specific structure of the pattern layer 106 is described with reference to FIG. 23. The pattern layer 106 illustrated in FIG. 23 includes a first color pattern layer 10 provided on one face 4a of the film 125 and a second color pattern layer 20 provided on the first color pattern layer 10. The pattern layer 106 illustrated in FIG. 23 has the same configuration as the pattern printing layer 5 illustrated in FIG. 2, and thus the description thereof is omitted.

As illustrated in FIG. 20, the resin layer 103 functions to attenuate light from the viewpoint front side that passes through the light transmissive decorative insert film 122. The resin layer 103 is disposed on the back face of the light transmissive decorative insert film 122. In the display device 100, the resin layer 103 is disposed on the surface side of the display unit 104. The resin layer 103 is a colored transparent molded resin layer with a predetermined transmittance. The transmittance of the resin layer 103 may be 10% or more, and may further be 18% or more. The transmittance of the resin layer 103 may be 40% or less, and may further be 20% or less. The transmittance of the resin layer 103 is preferably 20% or less to enhance the base concealment. The lower the transmittance, the more backside reflected light can be reduced. Thus, when the luminance of the display unit 104 installed on the back face is high, the resin layer 103 may be set to have a low transmittance.

The resin layer 103 is a layer formed by performing injection molding in a state where the light transmissive decorative insert film 122 is inserted into a mold. The resin layer 103 is configured with a smoked resin with a designated transmittance by adding an appropriate amount of pigment to a transparent resin. As a resin for injection, a resin pellet in which a pigment is previously added and the transmittance is adjusted may be used. By making the resin layer 103 smoke-colored, it is possible to reduce the amount of transmitted light emitted onto the pattern on the light transmissive decorative insert film 122 from behind, the transmitted light being reflected at a boundary with the air layer on the rear side of the injection-molded resin layer 103.

The material of the transparent resin of the resin layer 103 does not matter as long as it is a transparent resin such as acryl, polycarbonate, or ABS. The pigment may be carbon black. Alternatively, the pigment may be an inorganic or organic coloring pigment. For example, it is preferable that the resin is colored to a gray smoke color using carbon black as the pigment. However, in order to control the color tone of the pattern, a brown-based pigment may be added to obtain a resin colored to a brown smoke. However, when smoke coloring is performed, the color tone of liquid crystal changes depending on pigments when viewed through a liquid crystal screen, and thus RGB adjustment may be performed. When a liquid crystal image appears blue, the gain and bias of B may be reduced. When the liquid crystal image appears red, the gain and bias of R may be reduced. Inorganic pigments may be preferably used, but organic pigments or dyes may also be used. Since the resin transmittance of the resin layer 103 depends on the thickness of the resin, the transmittance of the smoked resin actually injected is measured, and an appropriate amount of pigment is added to the resin for injection to achieve a designated transmittance.

The resin layer 103 is colored. The color of the resin layer 103 is not particularly limited, and any color may be adopted. When an image on the display unit 104 is displayed, a gray color is preferable. Various colors can be adopted for the resin layer 103, and the resin layer 103 may be set to have a desired wall color, and thus the color is not limited to those described above. The resin layer 103 may control the color tone of the light transmissive decorative insert film 122 using the color of the resin layer 103. For example, at a timing when the display unit 104 is in an OFF state, the pattern on the pattern layer 106 of the light transmissive decorative insert film 122 is visually recognized in both a portion with the display unit 104 and a portion without the display unit 104. At this time, the color tone of the pattern on the pattern layer 106 is controlled by the color of the resin layer 103. For example, when the color of the resin layer 103 is brown and the pattern on the pattern layer 106 is wood grain, the brownish wood grain can be visually recognized.

The lower the transmittance of the resin layer 103, the greater the effect of reducing reflected light, but it is preferable to optimize the transmittance of the resin layer 103 in consideration of the luminance of the display unit 104, and the like. Since changing the thickness of the resin layer 103 changes the transmittance of the portion, it is preferable to make the thickness constant, but the thickness can be changed. When the color tone changes due to a change in thickness, it is preferable to adjust the color tone by attaching a black sheet or performing painting on the rear face side. When the resin layer 103 affects the color tone of the image on the display unit 104, it is preferable to adjust the color tone by adjusting the gains or biases of RGB of the display unit 104. The biases and gains of RGB of the display unit 104 of the display device 100 may be adjusted in accordance with the color tone of the resin layer 103, thereby making white display appear whiter through the resin layer 103.

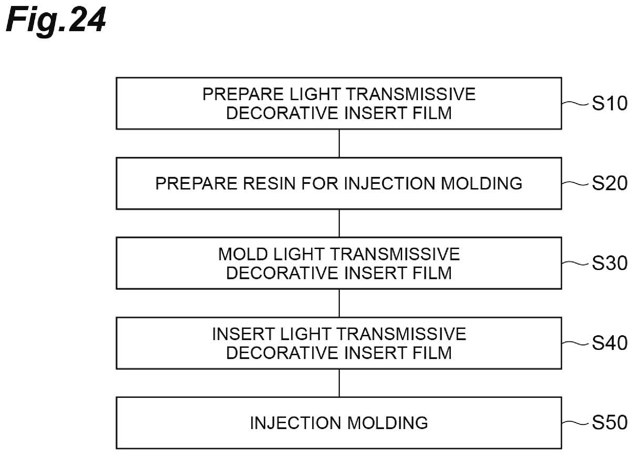

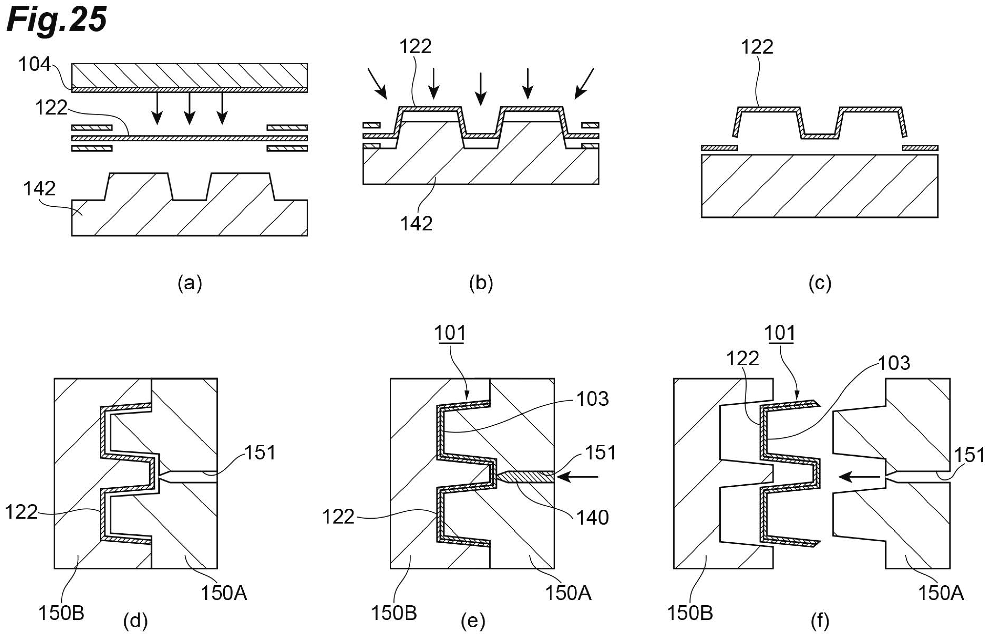

Next, an injection molding method according to the present embodiment will be described with reference to FIGS. 24 and 25. FIG. 24 is a process diagram illustrating an example of the procedure of the injection molding method. FIG. 25 is a schematic diagram illustrating the procedure of the injection molding method. As illustrated in FIG. 24, first, a light transmissive decorative insert film 122 with a transmittance of visible light of 10% or more and 80% or less is prepared by decorating a film 125 (step S10). A resin 140 for injection molding (see FIG. 25(e)) with a transmittance of visible light of 40% or less is prepared by adding a pigment to a transparent resin (step S20). For example, pellets of acryl for injection molding are mixed with a carbon pigment and stirred while being melted with heat to produce acrylic resin for smoke. At this time, the amount of pigment is adjusted to achieve a designated transmittance.

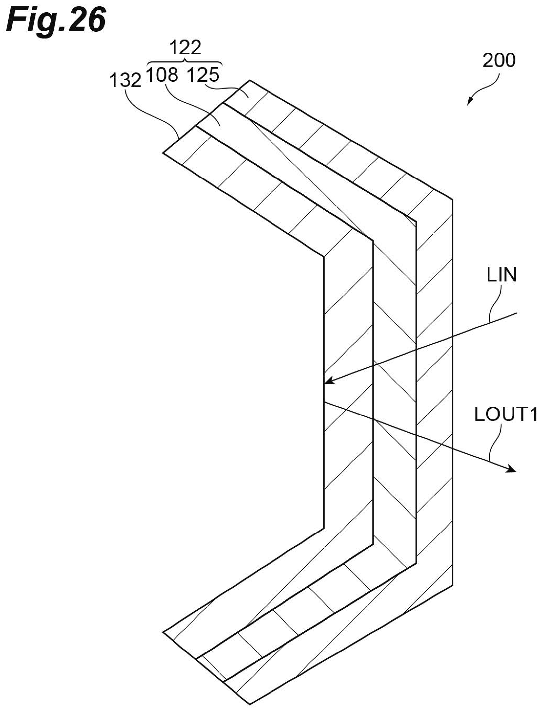

Next, the light transmissive decorative insert film 122 is molded (step S30). In step S30, the light transmissive decorative insert film 122 is molded into a desired shape for insert molding. Specifically, first, as illustrated in FIG. 26(a), the light transmissive decorative insert film 122 having a flat plate shape is heated by a heater 141. Next, as illustrated in FIG. 26(b), the heated light transmissive decorative insert film 122 is preformed by vacuum air-pressure forming. Thereby, the heated light transmissive decorative insert film 122 has a shape corresponding to a molding surface of a mold 142. Here, the light transmissive decorative insert film 122 after molding is deformed to form two peak parts. As illustrated in FIG. 26(c), trimming is performed to cut off unnecessary portions from the light transmissive decorative insert film 122 after molding.

Next, as illustrated in FIG. 24, the light transmissive decorative insert film 122 is inserted into molds 150A and 150B for injection molding (step S40). Specifically, as illustrated in FIG. 25(d), the heat transmissive decorative insert film 122 is inserted into a molding space between the mold 150A and the mold 150B. In the mold 150A on the rear face side, a flow channel 151 for supplying a resin 140 for injection molding is formed. The flow channel 151 is open at a molding surface of the mold 150A.

Next, as illustrated in FIG. 24, an injection molded product 101 is molded by injecting the resin 140 into the molds 150A and 150B into which the light transmissive decorative insert film 122 is inserted (step S40). As illustrated in FIG. 25(e), the resin 140 is injected from the flow channel 151 of the mold 150A against the rear face of the light transmissive decorative insert film 122. Thereby, the resin layer 103 is formed on the rear face side of the light transmissive decorative insert film 122 by injection molding. When the molding is completed, the molds 150A and 150B are opened to take the injection molded product 101 out, as illustrated in FIG. 25(f).

For example, as the resin 140 for injection molding, the transmittance of a smoked acrylic resin is adjusted to 20% to achieve a 10% transmittance of the injection molded product 101 that is injection-molded into the light transmissive decorative insert film 122 with a transmittance of 50%. After the injection molding is completed, the rear side of the injection molded product 101 may be painted black except for a window portion 135 for the display unit 104. At this time, the injection molded product 101 covers the display unit 104 (see FIG. 21( a )), thereby making it possible to conceal the display unit 104.

Next, the actions and effects of the injection molding method, the injection molded product 101, and the display device 100 according to the present embodiment will be described.

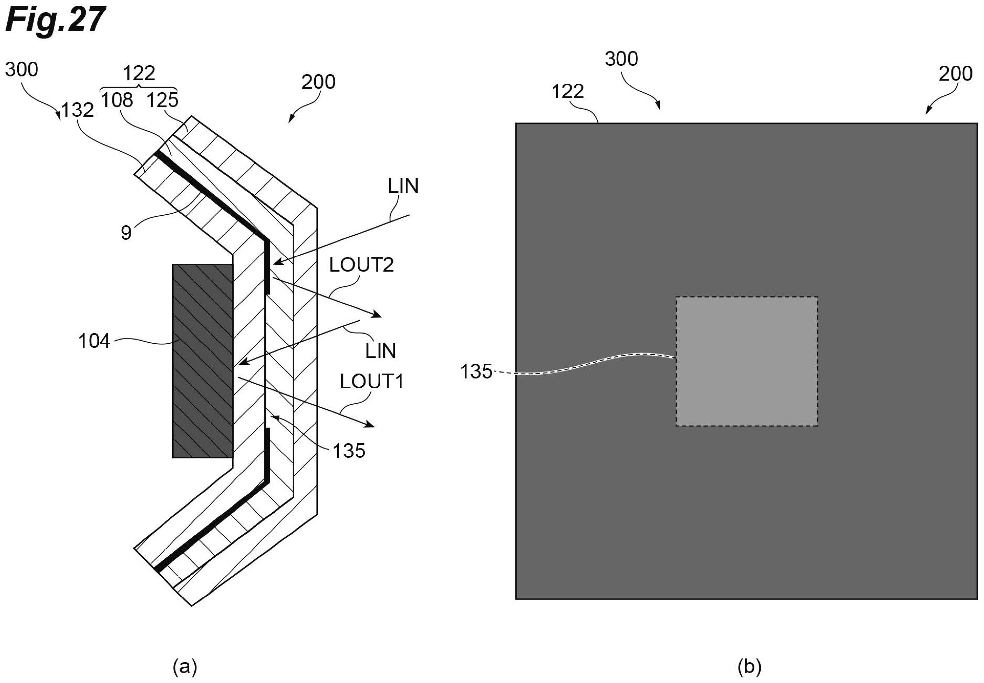

First, an injection molded product 200 and a display device 300 according to a comparative example are described with reference to FIGS. 26 and 27. As illustrated in FIG. 26, the injection molded product 200 according to the comparative example includes a light transmissive decorative insert film 122 and a transparent resin layer 132, and does not include a resin layer 103. Unlike the resin layer 103, the transmittance of the transparent resin layer 132 is not adjusted by adding a pigment, and the transmittance is 93%. As illustrated in FIG. 27, the display device 300 according to the comparative example covers the display unit 104 with the injection molded product 200. At a boundary between the light transmissive decorative layer insert film 122 and the transparent resin layer 132, a black printed part 9 is formed, where portions other than the window portion 135 for the display unit 104 are painted black.

In the injection molded product 200, when the rear face of the transparent resin layer 132 was an air layer as illustrated in FIGS. 26 and 27, incident light LIN incident from the surface of the light transmissive decorative insert film 122 is reflected by the rear face of the transparent resin layer 132. Thereby, reflected light LOUT1 at the interface of the air layer is emitted onto the light transmissive decorative insert film 122 from the rear face, resulting in a lighter color tone of the light transmissive decorative insert film 122. Such a phenomenon causes the pattern on the light transmissive decorative insert film 122 to become less clearly visible due to the color tone of the pattern becoming lighter, and also leads to a reduction in the contrast of an image on the display unit 104 when viewed through the injection molded product 200. When the display unit 104 is in an OFF state, the pattern layer is visible on the surface of the injection molded product 200, but in the case of the transparent resin layer 132, the reflected light LOUT1 from the display unit 104 is brighter than reflected light LOUT2 from the black printed part 9. Thus, the color tone of the pattern in the window portion 135 appears lighter, and the window portion 135 becomes visible even when the display unit 104 is not turned on (see FIG. 27(b)).

On the other hand, in the injection molding method according to the present embodiment, the resin 140 is injection-molded in a state where the light transmissive decorative insert film 122 is inserted into the molds 150A and 150B. For this reason, the resin layer 103 is formed by injection molding on the rear side of the decorated light transmissive decorative insert film 122 with a transmittance of 10% or more and 80% or less. The resin layer 103 is formed by injection molding by adding a pigment to a transparent resin and adjusting the transmittance to 40% or less. Thus, even when light incident on the surface of the light transmissive decorative insert film 122 is reflected by the air layer on the rear face of the resin layer 103, but the reflected light is reduced. For this reason, the amount of light emitted onto the light transmissive decorative insert film 122 from the rear side is reduced, and thus it is possible to prevent the color tone of the decorated pattern from becoming lighter. In addition, base concealment is increased by reducing the transmittance of the resin for injection molding, and even when the display unit 104 is provided inside, the presence of the display unit 104 can be concealed. It is also possible to eliminate a concealing layer or a colored layer of the light transmissive decorative insert film 122 itself by using a smoked resin for injection molding.

As illustrated in FIG. 21(a), when the resin layer 103 is used, a difference in brightness between the reflected light LOUT1 at the window portion 135 corresponding to the display unit 104 and the reflected light LOUT2 at the black printed part 9 is small. For this reason, the color tone of the window portion 135 is not brightened (see FIG. 21(b)), which can conceal the presence of the window portion 135 when the display unit 104 is in an OFF state. In the case of a display device for images, such as the display unit 104, the contrast of an image projected on the surface of the injection molded product 101 can be prevented from being reduced.

In the injection molding method, a pigment may be a mixture of pigments of a plurality of colors or a monochromatic color pigment. To eliminate a variation in color, a raw material is preferably monochromatic and black. The monochromatic pigment may be carbon black. In this case, a moderate amount of carbon is added to the transparent resin, and thus the resin 140 for injection molding can be formed in gray smoke with a transmittance of 40% or less.

In the injection molding method, the pigment may be an inorganic or organic coloring pigment. Thereby, it is possible to control the color tone of the light transmissive decorative insert film 122 by coloring the smoked resin.

The injection molded product 101 according to the present embodiment is molded by the injection molding method described above. In this case, it is possible to provide the injection molded product 101 in which the color tone of the pattern on the light transmissive decorative insert film 122 does not become lighter by backside reflection.

The display device 100 includes the injection molded product 101 described above and the display unit 104. In this case, it is possible to conceal the display unit 104 while preventing the color tone of the pattern on the light transmissive decorative insert film 122 from becoming lighter.

When the pattern layer 106 of the light transmissive decorative insert film 122 is formed by printing using an interference pigment, the interference pigment itself has no color and light transmitted from the rear face is not affected by the color of the pattern. For this reason, an image on the display unit 104 on the back face can be transmitted without being covered by the color of the pattern. Even without using the interference pigment, when the concealing layer 107 does not shield light, the pattern layer 106 can be light transmissive, but an image cannot be projected clearly because the pattern is covered by the image. However, designs such as switches and numerical and textual information have no visibility problems even when the pattern is covered. It is preferable to select an ink material for the pattern layer 106 in accordance with the application. In the case of an interference pigment, the concealing layer 107 may be formed in gray smoke in order to enhance color development, but the concealing layer may be substituted by forming the resin of the injection-molded resin layer 103 in gray smoke.

The injection molded product, the display device, and the display method according to the present disclosure are not limited to those in the embodiments described above, and various other modifications can be made.

For example, the second color pattern layer may contain first interference pigments of a plurality of colors that generate different first interference light beams, and the first color pattern layer may contain second interference pigments that generate second interference light of a monochromatic color different from a mixed color exhibited by the plurality of first interference pigments. In the above-described embodiments, the first color pigment chips are first interference pigments of two colors, but the first color pigment chips may be first interference pigments of three or more colors.

The shape of an injection molded product is not limited to the shape as illustrated in FIG. 20. For example, the rear face of the resin layer 103 may be configured in a flat shape without bending.

### [Third Disclosure]

In the related art, as a decorative sheet for walls and the like, a decorative sheet having a base material and a printing layer, which is provided on the surface of the base material and having a pattern such as a wood grain pattern or an abstract pattern, is known. On a wall surface on which the decorative sheet is installed, the above-mentioned pattern is visually recognized at all times. On the other hand, it is required that the visually recognized pattern changes depending on whether a light source installed on the rear face side of the decorative sheet is used.

For example, Patent No. 5725581 discloses a display device provided with a light source under a decorative sheet, and discloses a printed material in which, when the light source is turned off, a design is visually recognized by reflected light from a printing layer configured with RGB interference pigments, while when the light source is turned on, a design is visually recognized by transmitted light from a CMY printing layer (see FIG. 11 of Patent No. 5725581). Patent No. 6839319 discloses a decorative sheet that has two designs using interference pigments, and when an image on the rear face side is not displayed, the design is visually recognized, and when an image on the rear face side is displayed, the image is visually recognized (see FIGS. 1 and 2 of Patent No. 6839319).

The printed material disclosed in Patent No. 5725581 includes a first color pattern layer, a second color pattern layer, and a third color pattern layer, in which a pigment chip included in each of the pattern layers is any one of a red interference pigment, a green interference pigment, and a blue interference pigment. In this printed material, the number of pattern layers is larger than in the printing of the related art in order to make colors more vivid. The decorative sheet disclosed in Patent No. 6839319 includes a first design layer that contains a plurality of types of interference pigments and exhibits a first mixed color, and a second design layer that includes a plurality of types of interference pigments and exhibits a second mixed color different from the first mixed color. In this decorative sheet, each of the first and second design layers contains a plurality of types of interference pigments, which may result in a concern that color mixing and registration work become complicated during printing.

An object of the present disclosure is to solve the above-described problems and to provide molded products with excellent manufacturing efficiency by making it possible to express three-dimensional patterns even with a small number of printing layers of a decorative sheet, and by simplifying color mixing and registration work when printing decorative sheets.

An aspect of the present disclosure includes the following [1] - [9].
[1] A molded product including a resin molded body and a decorative sheet disposed on a surface of the resin molded body, in which
   the resin molded body and the decorative sheet are visible light transmissive,
   the decorative sheet includes a base material layer and a pattern printing layer,
   the pattern printing layer includes a first color pattern layer provided on one face of the base material layer and configured with a plurality of first color dots, and
   a second color pattern layer provided on the first color pattern layer and configured with a plurality of second color dots,
   each of the plurality of first color dots includes a first color binder and a plurality of first color pigment chips dispersed within the first color binder,
   each of the plurality of second color dots includes a second color binder and a plurality of second color pigment chips dispersed within the second color binder,
   one of the plurality of first color pigment chips and the plurality of second color pigment chips is first interference pigments of a plurality of colors that generate different first interference light beams,
   the other of the plurality of first color pigment chips and the plurality of second color pigment chips is second interference pigments that generate second interference light of a monochromatic color different from a mixed color exhibited by the plurality of first interference pigments, and
   additive color mixing of the plurality of first interference light beams and the second interference light is performed.
[2] The molded product according to [1], the molded product is an injection molded product.
[3] The molded product according to [1], the molded product is a TOM molded product.
[4] A molded product formed of only a decorative sheet, in which
   the decorative sheet is visible light transmissive,
   the decorative sheet includes a base material layer and a pattern printing layer,
   the pattern printing layer includes a first color pattern layer provided on one face of the base material layer and configured with a plurality of first color dots, and
   a second color pattern layer provided on the first color pattern layer and configured with a plurality of second color dots,
   each of the plurality of first color dots includes a first color binder and a plurality of first color pigment chips dispersed within the first color binder,
   each of the plurality of second color dots includes a second color binder and a plurality of second color pigment chips dispersed within the second color binder,
   one of the plurality of first color pigment chips and the plurality of second color pigment chips is first interference pigments of a plurality of colors that generate different first interference light beams,
   the other of the plurality of first color pigment chips and the plurality of second color pigment chips is second interference pigments that generate second interference light of a monochromatic color different from a mixed color exhibited by the plurality of first interference pigments, and
   additive color mixing of the plurality of first interference light beams and the second interference light is performed.
[5] The molded product according to any one of [1] to [4], in which the decorative sheet further includes a white pattern layer that is provided on the second color pattern layer and configured with a plurality of silver dots, and
   each of the plurality of silver dots includes a silver binder and a plurality of silver pigment chips dispersed within the silver binder.
[6] The molded product according to any one of [1] to [5], in which the decorative sheet further includes a transmissive smoke printing layer provided on an outermost surface on a side opposite to the base material layer with respect to the pattern printing layer.
[7] The molded product according to any one of [1] to [6], in which each of the first interference pigment and the second interference pigment includes titanium dioxide coated mica with a particle size of 25 µm or more to 60 µm or less.
[8] The molded product according to any one of [1] to [7], in which the content of the plurality of first color pigment chips is 0.5 parts by mass or more and 20 parts by mass or less with respect to 100 parts by mass of the first color binder, and
   the content of the plurality of second color pigment chips is 0.5 parts by mass or more and 20 parts by mass or less with respect to 100 parts by mass of the second color binder.
[9] A display device including the molded product according to any one of [1] to [8], and a light source.
[10] The display device according to [9], in which the light source is a display unit.

According to the present disclosure, it is possible to provide molded products with excellent manufacturing efficiency by making it possible to express three-dimensional patterns even with a small number of printing layers of a decorative sheet, and by simplifying color mixing and registration work when printing decorative sheets.

Hereinafter, the embodiments of the present disclosure will be described in detail with reference to the drawings. In the following description, the same elements in the drawings are denoted by the same symbols, and redundant explanations are omitted. The drawings are schematic, and for example, relationships between thicknesses and planar dimensions, and ratios of thicknesses of layers differ from the actual ones. The embodiments shown below are examples of configurations for embodying the technical ideas of the present disclosure, and the technical ideas of the present disclosure are not limited to materials, shapes, structures, and the like of components described below.

### [Embodiment 3-1]

### <Display Device, Molded Product>

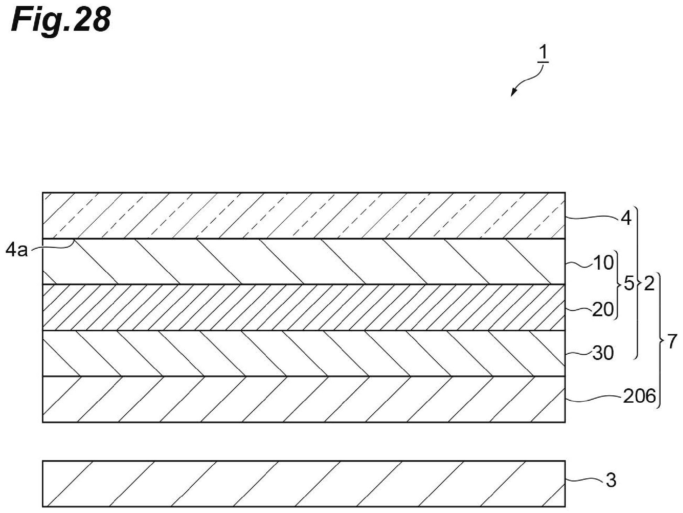

FIG. 28 is a cross-sectional view schematically illustrating a display device according to Embodiment 3-1. A cross-sectional view schematically illustrating a pattern printing layer provided in a printed material (decorative sheet) of the display device illustrated in FIG. 28 is FIG. 2 described above. A display device 1 includes a molded product 7 and a light source 3, as illustrated in FIG. 28. The molded product 7 includes a printed material 2 (decorative sheet) and a resin molded body 206. The printed material 2 (decorative sheet) is a sheet for expressing a pattern, and includes a light transmissive base material 4 (base material layer), a pattern printing layer 5, and a transmissive smoke printing layer 30. The printed material 2 (decorative sheet) is disposed on the surface of the resin molded body 206 in front of the light source 3 (between a viewer and the light source 3). The resin molded body 206 and the printed material 2 (decorative sheet) are visible light transmissive. For this reason, when the power supply of the light source 3 is in an ON state, the viewer can visually recognize light from the light source 3 which is transmitted through the resin molded body 206 and the printed material 2 (decorative sheet), and when the power supply of the light source 3 is in an OFF state, the viewer can visually recognize a pattern expressed by the printed material 2 (decorative sheet). The light source 3 is, for example, a display unit.

### <Resin Molded Body>

The resin molded body is visible light transmissive. A resin that configures the resin molded body may be any visible light transmissive resin, and examples thereof include PET, PMMA, polyethylene, polypropylene, nylon, and the like. The resin molded body may contain a thermoplastic resin that is visible light transmissive from the viewpoint of making it easy to obtain molded products with complex shapes.

The resin molded body may further contain components other than a resin. The resin molded body may contain an additive such as a filler, an antistatic agent, an ultraviolet absorber, a plasticizer, and a lubricant.

### <Decorative sheet>

The light transmissive base material 4 (base material layer) is a visible light transmissive base material. The light transmissive base material 4 (base material layer) includes, for example, a visible light transmissive resin. Examples of the visible light transmissive resin includes PET, PMMA, polyethylene, polypropylene, nylon, polycarbonate (PC), and ABS. The visible light transmissive resin may include a visible light transmissive thermoplastic resin from the viewpoint of making it easy to obtain molded products with complex shapes.

The thickness of the light transmissive base material 4 (base material layer) may be 25 µm or more, 50 µm or more, or 75 µm or more from the viewpoint of the printed material 2 (decorative sheet) having a sufficient strength. The thickness of the light transmissive base material 4 (base material layer) may be 500 µm or less, 350 µm or less, or 250 µm or less from the viewpoint of preventing the printed material 2 (decorative sheet) from becoming excessively thick. The printed material 2 (decorative sheet) may be provided with a surface protective layer on the surface side (the side opposite to the pattern printing layer 5) of the light transmissive base material 4 (base material layer).

The pattern printing layer 5 is a layer that expresses a pattern of the printed material 2 (decorative sheet). The pattern printing layer 5 includes a first color pattern layer 10 provided on one face 4a of the light transmissive base material 4 (base material layer) and a second color pattern layer 20 provided on the first color pattern layer 10. A configuration similar to that described based on FIG. 2 in the first disclosure is applicable to the printed material 2 (decorative sheet). According to the molded product 7 including the printed material 2 (decorative sheet), it is possible to express a pattern with a three-dimensional effect even with a small number of printing layers of the decorative sheet, and manufacturing efficiency is improved by simplifying color mixing and registration work when the decorative sheet is printed.

In Embodiment 3-1, the printed material 2 (decorative sheet) of the molded product 7 includes the transmissive smoke printing layer 30 provided on the second color pattern layer 20. Thereby, color development of the first color pattern layer 10 and the second color pattern layer 20 is more excellent. Furthermore, since the transmissive smoke printing layer 30 has transparency, a decrease in the visibility of an image on the display device 1 is well curbed.

In Embodiment 3-1, each of the first interference pigments 14a and 14b and the second interference pigment 24 contains titanium dioxide coated mica with a particle size of 25 µm or more and 60 µm or less. By containing titanium dioxide coated mica with a particle size of 25 µm or more, the transparency and color development of the pattern printing layer 5 can be improved. By containing titanium dioxide coated mica with a particle size of 60 µm or less, it is possible to prevent the resolution and gradation of the pattern printing layer 5 from being reduced.

In Embodiment 3-1, the content of a plurality of first color pigment chips 13 may be 0.5 parts by mass or more and 20 parts by mass or less with respect to 100 parts by mass of the first color binder 12, and the content of a plurality of second color pigment chips 23 may be 0.5 parts by mass or more and 20 parts by mass or less with respect to 100 parts by mass of the second color binder. Since the content of the plurality of first color pigment chips 13 is in the range of 0.5 parts by mass or more, the pattern of the first color pattern layer 10 is well expressed. Since the content of the plurality of first color pigment chips 13 is in the range of 20 parts by mass or less, the coating film property and transparency of the first color pattern layer 10 can be prevented from deteriorating. Similarly, since the content of the plurality of second color pigment chips 23 is in the range of 0.5 parts by mass or more to 20 parts by mass or less with respect to 100 parts by mass of the second color binder 22, the pattern on the second color pattern layer 20 is well expressed, and the coating film property and transparency of the second color pattern layer 20 can be prevented from deteriorating.

In Embodiment 3-1, the total light transmittance of the printed material 2 (decorative sheet) may be 30% to 70%. When the total light transmittance is 30% or more and the printed material 2 (decorative sheet) is placed in front of a screen, the pattern printing layer 5 is hardly visually recognized due to light of an image on the screen, and the image is visually recognized more clearly. When the total light transmittance is 70% or less, it is possible to prevent the pattern on the pattern printing layer 5 from appearing dark even when the screen is black.

In Embodiment 3-1, an adhesive layer may be provided between the resin molded body 206 and the printed material 2 (decorative sheet). Thereby, adhesion between the resin molded body 206 and the printed material 2 (decorative sheet) is improved.

In Embodiment 3-1, the molded product may be, for example, a member for an automobile, a member for an electrical appliance, or a member for a wall surface. The molded product is not limited to these applications.

In Embodiment 3-1, the display device 1 includes the molded product 7 and the light source 3. According to the display device 1, when the light source 3 is not turned on, the pattern on the pattern printing layer 5 of the molded product 7 is visually recognized, and when the light source 3 is turned on, transmitted light (pattern display, image display, or the like) from the light source 3 is visually recognized.

In Embodiment 3-1, the light source 3 may be a display unit. In this case, when the display is not turned on, the pattern on the pattern printing layer 5 of the molded product 7 is visually recognized, and when the display is turned on, transmitted light (pattern display, image display, or the like) from the display is visually recognized.

### <Manufacturing Method for Molded Product>

A molded product is molded into a three-dimensional shape, for example, by injection molding. That is, the molded product may be an injection molded product. Injection molding of the molded product provides excellent adhesion between a resin molded body and a decorative sheet. The molded product may specifically be a film insert molded product or an in-mold molded product.

When the molded product is a film insert molded product, the molded product can be obtained by the following procedure. That is, first, the decorative sheet is heated to be softened, and then the decorative sheet is molded using a forming die. Then, after trimming the decorative sheet as necessary, the decorative sheet is inserted into a molding die. The molded product can be obtained by inserting a resin configuring a resin molded body into the molding die into which the decorative sheet has been inserted, performing injection molding, and then performing mold releasing.

When the molded product is an in-mold molded product, the molded product can be obtained by the following procedure. That is, first, a decorative sheet is supplied to a forming die and fixed, and then suction is performed to make the decorative sheet match the shape of the forming die. Then, after mold closing is performed, a resin configuring a resin molded body is inserted to perform injection molding. The molded product can be obtained by performing mold opening.

The molded product is molded into a three-dimensional shape, for example, by vacuum forming and/or air-pressure forming. By molding the molded product by vacuum forming and/or air-pressure forming, the time and effort required to remove burrs from the decorative sheet is reduced when manufacturing the molded product, resulting in excellent manufacturing efficiency. The molded product may specifically be a three dimension overlay method (TOM) molded product.

When the molded product is a TOM molded product, the molded product can be obtained by the following procedure. That is, first, a resin molded body is manufactured. The manufactured resin molded body is disposed in a lower chamber of a TOM molding device. A decorative sheet is disposed between the lower chamber and an upper chamber of the device and sealed, and then the decorative sheet is heated to be softened. Next, the lower chamber of the device is set to be in a vacuum state, and then the upper chamber is pressurized to push up the resin molded body. The decorative sheet is transferred in accordance with the shape of the resin molded body, thereby obtaining a molded product.

### [Embodiment 3-2]

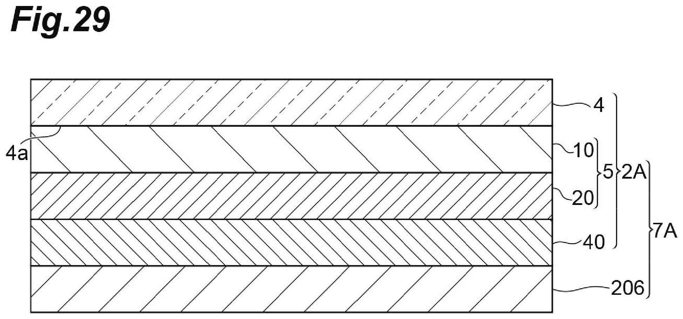

Hereinafter, a molded product 7A according to Embodiment 3-2 will be described with reference to FIG. 29 and FIG. 4. In the description of Embodiment 3-2, descriptions that overlap with Embodiment 3-1 above will be omitted, and parts that differ from Embodiment 3-1 above will be described. That is, the description of Embodiment 3-1 above may be appropriately applied to Embodiment 3-2 to the extent technically possible.

FIG. 29 is a cross-sectional view schematically illustrating a molded product according to Embodiment 3-2. FIG. 4 described above also corresponds to a cross-sectional view schematically illustrating a white pattern layer provided in a decorative sheet illustrated in FIG. 29. A printed material 2A (decorative sheet) includes a light transmissive base material 4 (base material layer) and a pattern printing layer 5. The printed material 2A (decorative sheet) further includes a white pattern layer 40 provided on a second color pattern layer 20. A configuration similar to that described based on FIG. 4 in the first disclosure is applicable to the printed material 2A (decorative sheet).

### [Embodiment 3-3]

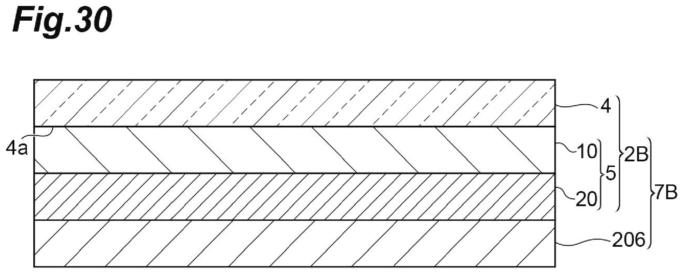

Hereinafter, a molded product 7B according to Embodiment 3-3 will be described with reference to FIG. 30. In the description of Embodiment 3-3, descriptions that overlap with Embodiments 3-1 and 3-2 above will be omitted, and parts that differ from Embodiments 3-1 and 3-2 above will be described. That is, the descriptions of Embodiments 3-1 and 3-2 above may be appropriately applied to Embodiment 3-3 to the extent technically possible.

FIG. 30 is a cross-sectional view schematically illustrating a molded product according to Embodiment 3-3. A printed material 2B (decorative sheet) of the molded product 7B includes a light transmissive base material 4 (base material layer) and a pattern printing layer 5. That is, the printed material 2B (decorative sheet) does not include a transmissive smoke printing layer 30 and a white pattern layer 40. Even with the configuration of the printed material 2B (decorative sheet) described above, the same actions and effects as in Embodiment 3-1 above are achieved.

### [Embodiment 3-4]

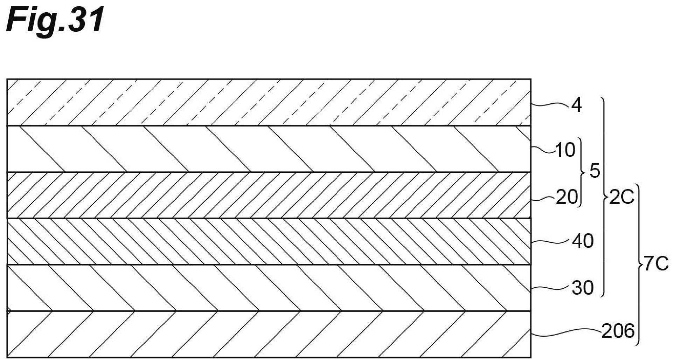

Hereinafter, a molded product 7C according to Embodiment 3-4 will be described with reference to FIG. 31. In the description of Embodiment 3-4, descriptions that overlap with Embodiments 3-1, 3-2, and 3-3 above will be omitted, and parts that differ from Embodiments 3-1, 3-2, and 3-3 above will be described. That is, the descriptions of Embodiments 3-1, 3-2, and 3-3 above may be appropriately applied to Embodiment 3-4 to the extent technically possible.

FIG. 31 is a cross-sectional view schematically illustrating a molded product according to Embodiment 3-4. A printed material 2C (decorative sheet) of a molded product 7C includes a light transmissive base material 4 (base material layer), a pattern printing layer 5, a white pattern layer 40, and a transmissive smoke printing layer 30. The white pattern layer 40 is provided on a second color pattern layer 20, and the transmissive smoke printing layer 30 is provided on the white pattern layer 40. Even with the configuration of the printed material 2C (decorative sheet) described above, the same actions and effects as in Embodiments 3-1, 3-2, and 3-3 above are achieved.

A display device and a molded product according to the present disclosure are not limited to those in the embodiments described above, and various other modifications can be made. For example, the second color pattern layer may contain a plurality of colors of first interference pigments that generate different first interference light beams, and the first color pattern layer may contain second interference pigments that generate monochromatic second interference light different from the mixed colors exhibited by the plurality of first interference pigments. In the above-described embodiments, the first color pigment chips are first interference pigments of two colors, but the first color pigment chips may be first interference pigments of three or more colors.

### [Fifth Embodiment]

The decorative sheet described above may be one that can be three-dimensionally molded by forming. A molded product may also be one that does not include a resin molded body, but is configured with only a decorative sheet. That is, another embodiment of the present disclosure is a forming molded product of the above-described decorative sheet, and specifically, is a molded product formed of only a decorative sheet, in which the decorative sheet is visible light transmissive, the decorative sheet includes a base material layer and a pattern printing layer, the pattern printing layer includes a first color pattern layer provided on one face of the base material layer and configured with a plurality of first color dots, and a second color pattern layer provided on the first color pattern layer and configured with a plurality of second color dots, each of the plurality of first color dots includes a first color binder and a plurality of first color pigment chips dispersed within the first color binder, each of the plurality of second color dots includes a second color binder and a plurality of second color pigment chips dispersed within the second color binder, one of the plurality of first color pigment chips and the plurality of second color pigment chips is first interference pigments of a plurality of colors that generate different first interference light beams, the other of the plurality of first color pigment chips and the plurality of second color pigment chips is second interference pigments that generate second interference light of a monochromatic color different from a mixed color exhibited by the plurality of first interference pigments, and additive color mixing of the plurality of first interference light beams and the second interference light is performed.

Regarding the forming molded product, the descriptions of Embodiments 3-1, 3-2, and 3-3 above may be appropriately applied used for Embodiment 3-4 to the extent technically possible.

The forming molded product can be obtained by performing vacuum forming, air-pressure forming, or press forming of the decorative sheet. As a specific molding method, a known method can be applied.

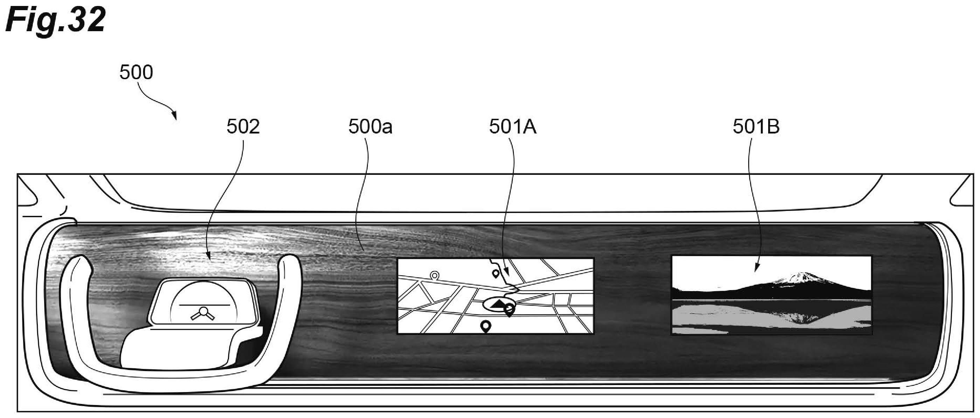

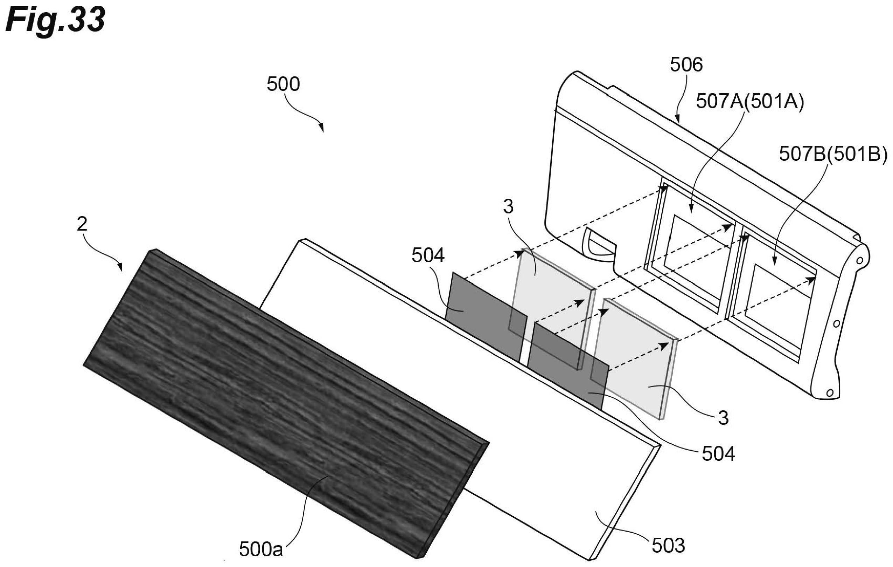

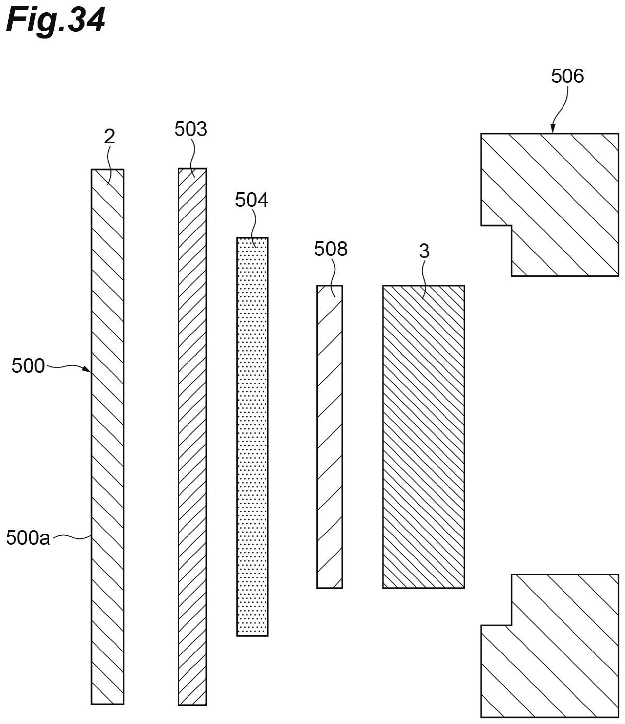

An example of application of the technology illustrated in FIGS. 1 to 31 described above will be described with reference to FIGS. 32 to 34. FIG. 32 is a front view of in-vehicle equipment 500 including the display device 1. An in-vehicle console is exemplified as the in-vehicle equipment 500. FIG. 33 is an exploded perspective view of the in-vehicle equipment 500. FIG. 34 is a cross-sectional view of the in-vehicle equipment 500. The in-vehicle equipment 500 is an operation panel installed inside an automobile. As illustrated in FIG. 32, the in-vehicle equipment 500 includes an image transmissive part 501A, an image transmissive part 501B, and a handle 502 on a surface 500a. The image transmissive parts 501A and 501B display images on the surface 500a when the display unit is in an ON state, and display a pattern on the surface 500a when the display unit is in an OFF state.

As illustrated in FIGS. 33 and 34, the in-vehicle equipment 500 includes, in order from the surface 500a, a printed material 2 (decorative sheet), a sheet tape 503, an acrylic plate 504, an adhesive layer 508, a light source 3 which is a display unit, and a housing 506. The sheet tape 503 bonds the printed material 2 (decorative sheet) and the acrylic plate 504 together. The adhesive layer 508 is configured with, for example, OCA and bonds the acrylic plate 504 and the light source 3 together. The housing 506 supports various components. As illustrated in FIG. 33, the housing 506 includes accommodation parts 507A and 507B at positions corresponding to the image transmissive parts 501A and 501B. The accommodation part 507A accommodates the light source 3 and the acrylic plate 504 corresponding to the image transmissive part 501A. The accommodation part 507B accommodates the light source 3 and the acrylic plate 504 corresponding to the image transmissive part 501B. The printed material 2 (decorative sheet) is bonded to the surface of the housing 506 so as to conceal the light sources 3 of the accommodation parts 507A and 507B and the entire surface of the housing 506.

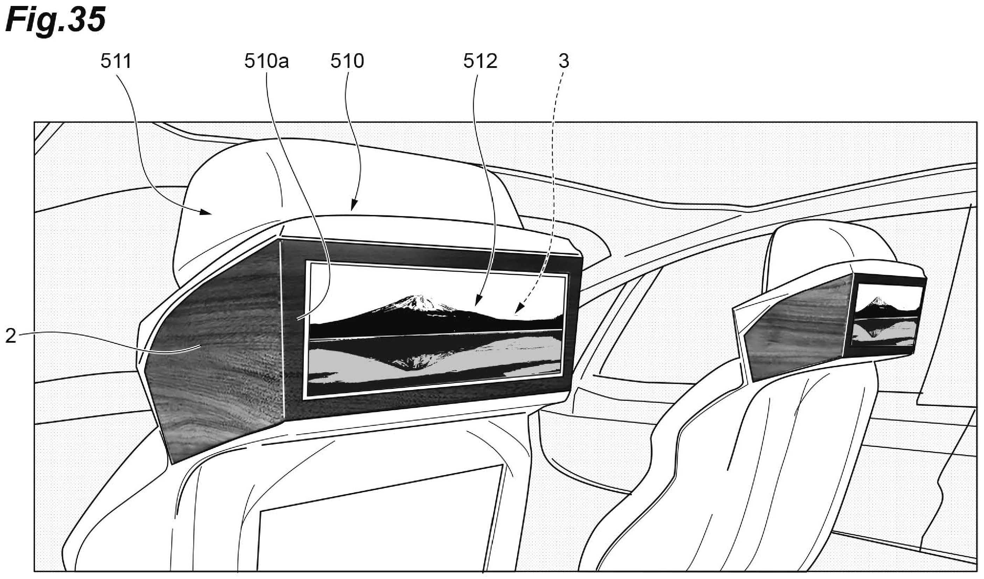

In addition, the above-described technology may be applied to the in-vehicle equipment 510 illustrated in FIG. 35. The in-vehicle equipment 510 is provided on the back face side of a seat 511 in the vehicle. The in-vehicle equipment 510 accommodates the light source 3, which is a display unit, therein, and includes the printed material 2 (decorative sheet) covering the light source 3. The in-vehicle equipment 51 includes an image transmissive part 512 on a back face 510a at the eye-level position of a rear-seat occupant. The image transmissive part 512 displays images on the back face 510a when the display unit is in an ON state, and displays a pattern on the back face 510a when the display unit is in an OFF state.

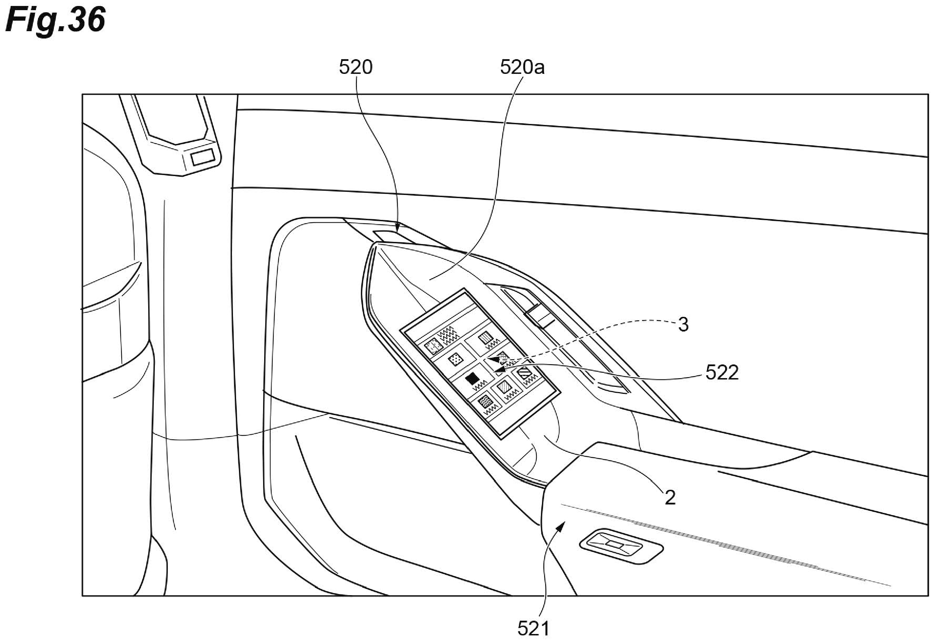

In addition, the above-described technology may be applied to the in-vehicle equipment 520 illustrated in FIG. 36. The in-vehicle equipment 520 is provided on a door handle 521 in the vehicle. The in-vehicle equipment 520 accommodates the light source 3, which is a display unit, therein, and includes a printed material 2 (decorative sheet) covering the light source 3. The in-vehicle equipment 520 includes an image transmissive part 522 on an upper surface 520a of the door handle 521. The image transmissive part 522 displays images on the upper surface 520a when the display unit is in an ON state, and displays a pattern on the upper surface 520a when the display unit is in an OFF state. The in-vehicle equipment 520 is configured as a door switch for a door. In the in-vehicle equipment 520, an operation screen related to a door opening/closing operation is displayed on the image transmissive part 522 when the door is opened and closed. Otherwise, the in-vehicle equipment 520 turns off the display unit and conceals the display unit.

### Reference Signs List

1 Display device, 2, 2A, 2B, 2C Printed material (decorative sheet), 3 Light source, 4 Light transmissive base material, 5 Pattern printing layer, 206 Resin molded body, 7, 7A, 7B, 7C Molded product, 10 First color pattern layer, 11 First color dot, 12 First color binder, 13 First color pigment chip, 14a, 14b First interference pigment, 15a, 15b First interference light, 20 Second color pattern layer, 21 Second color dot, 22 Second color binder, 23 Second color pigment chip, 24 Second interference pigment, 25 Second interference light, 30 Transmissive smoke printing layer, 40 White pattern layer, 41 Silver dot, 42 Silver binder, 43 Silver pigment chip, 50 Liquid crystal panel, 52 Display part, 54 Outer peripheral part, 57 Treated part, 58 Resin layer, 60 Light transmissive base material for panel (light transmissive base material), 70 Display unit, 100 Display device, 101 Injection molded product, 122 Light transmissive decorative insert film, 103 Resin layer, 104 Display unit, 140 Resin, 150A, 150B Mold.

## Claims

1. A molded product comprising a resin molded body and a decorative sheet disposed on a surface of the resin molded body, wherein
the resin molded body and the decorative sheet are visible light transmissive,
the decorative sheet includes a base material layer and a pattern printing layer,
the pattern printing layer includes a first color pattern layer provided on one face of the base material layer and configured with a plurality of first color dots, and
a second color pattern layer provided on the first color pattern layer and configured with a plurality of second color dots,
each of the plurality of first color dots includes a first color binder and a plurality of first color pigment chips dispersed within the first color binder,
each of the plurality of second color dots includes a second color binder and a plurality of second color pigment chips dispersed within the second color binder,
one of the plurality of first color pigment chips and the plurality of second color pigment chips is first interference pigments of a plurality of colors that generate different first interference light beams,
the other of the plurality of first color pigment chips and the plurality of second color pigment chips is second interference pigments that generate second interference light of a monochromatic color different from a mixed color exhibited by the plurality of first interference pigments, and
additive color mixing of the plurality of first interference light beams and the second interference light is performed.

2. The molded product according to claim 1, wherein the molded product is an injection molded product.

3. The molded product according to claim 1, wherein the molded product is a TOM molded product.

4. A molded product formed of only a decorative sheet, wherein
the decorative sheet is visible light transmissive,
the decorative sheet includes a base material layer and a pattern printing layer,
the pattern printing layer includes a first color pattern layer provided on one face of the base material layer and configured with a plurality of first color dots, and
a second color pattern layer provided on the first color pattern layer and configured with a plurality of second color dots,
each of the plurality of first color dots includes a first color binder and a plurality of first color pigment chips dispersed within the first color binder,
each of the plurality of second color dots includes a second color binder and a plurality of second color pigment chips dispersed within the second color binder,
one of the plurality of first color pigment chips and the plurality of second color pigment chips is first interference pigments of a plurality of colors that generate different first interference light beams,
the other of the plurality of first color pigment chips and the plurality of second color pigment chips is second interference pigments that generate second interference light of a monochromatic color different from a mixed color exhibited by the plurality of first interference pigments, and
additive color mixing of the plurality of first interference light beams and the second interference light is performed.

5. The molded product according to any one of claims 1 to 4, wherein
the decorative sheet further includes a white pattern layer that is provided on the second color pattern layer and configured with a plurality of silver dots, and
each of the plurality of silver dots includes a silver binder and a plurality of silver pigment chips dispersed within the silver binder.

6. The molded product according to any one of claims 1 to 4, wherein the decorative sheet further includes a transmissive smoke printing layer provided on an outermost surface on a side opposite to the base material layer with respect to the pattern printing layer.

7. The molded product according to any one of claims 1 to 4, wherein each of the first interference pigment and the second interference pigment includes titanium dioxide coated mica with a particle size of 25 µm or more to 60 µm or less.

8. The molded product according to any one of claims 1 to 4, wherein
the content of the plurality of first color pigment chips is 0.5 parts by mass or more and 20 parts by mass or less with respect to 100 parts by mass of the first color binder, and
the content of the plurality of second color pigment chips is 0.5 parts by mass or more and 20 parts by mass or less with respect to 100 parts by mass of the second color binder.

9. A display device comprising the molded product according to any one of claims 1 to 4, and a light source.

10. The display device according to claim 9, wherein the light source is a display unit.

11. An injection molding method comprising:
preparing a light transmissive decorative insert film having a transmittance of visible light of 10% or more and 80% or less by decorating a film;
preparing a resin having a transmittance of visible light of 40% or less by adding pigments to a transparent resin; and
inserting the light transmissive decorative insert film into a mold and injecting the resin into the mold to mold an injection molded product.

12. The injection molding method according to claim 11, wherein the pigment is carbon black.

13. The injection molding method according to claim 11, wherein the pigment is an inorganic or organic coloring pigment.

14. An injection molded product molded by the injection molding method according to any one of claims 11 to 13.

15. A display device comprising the injection molded product according to claim 14 and a display unit.

16. A liquid crystal panel comprising at least a light transmissive base material and a pattern printing layer, wherein
the pattern printing layer includes a pattern layer provided on one face side of the light transmissive base material and configured with a plurality of dots,
each of the plurality of dots includes a binder and a plurality of pigment chips dispersed within the binder,
the plurality of pigment chips are interference pigments,
the other surface of the light transmissive base material opposite to the pattern printing layer has a display part having light transmittance and an outer peripheral part on the outer periphery side of the display part,
the display part has a treated part having been subjected to anti-glare treatment, and
the outer peripheral part has a resin layer having been subjected to a stamping process using an ultraviolet curable resin.

17. The liquid crystal panel according to claim 16, wherein the anti-glare treatment is performed using a shot-blasting process.

18. The liquid crystal panel according to claim 16, further comprising a white pattern layer that is provided on the pattern printing layer and configured with a plurality of silver dots, wherein
each of the plurality of silver dots includes a silver binder and a plurality of silver pigment chips dispersed within the silver binder.

19. The liquid crystal panel according to claim 16, further comprising a transmissive smoke printing layer provided on an outermost surface on a side opposite to the light transmissive base material with respect to the pattern printing layer.

20. The liquid crystal panel according to claim 16, wherein the pattern layer includes
a first color pattern layer provided on one face side of the light transmissive base material and configured with a plurality of first color dots, and
a second color pattern layer provided on the first color pattern layer and configured with a plurality of second color dots,
each of the first color dots includes a first color binder and a plurality of first color pigment chips dispersed within the first color binder,
each of the second color dots includes a second color binder and a plurality of second color pigment chips dispersed within the second color binder,
any one of the first and second color pigment chips develops a color as interference light on a reflected light side and includes interference pigments of a plurality of different colors,
the other of the first and second color pigment chips develops a color as interference light on a reflected light side and includes one type of interference pigment developing a color different from a mixed color exhibited by the interference pigments of the plurality of colors included in the any one of the first and second color pigment chips, and
additive color mixing of the interference light is performed.

21. The liquid crystal panel according to claim 16, wherein the pattern layer includes
a first color pattern layer provided on one face side of the light transmissive base material and configured with a plurality of first color dots, and
a second color pattern layer provided on the first color pattern layer and configured with a plurality of second color dots,
each of the first color dots includes a first color binder and a plurality of first color pigment chips dispersed within the first color binder,
each of the second color dots includes a second color binder and a plurality of second color pigment chips dispersed within the second color binder,
the plurality of first color pigment chips are first interference pigments that generate first interference light of a monochromatic color,
the plurality of second color pigment chips are second interference pigments that generate second interference light of a monochromatic color different from the color exhibited by the first interference pigments, and
additive color mixing of the first interference light and the second interference light is performed.

22. The liquid crystal panel according to claim 16, wherein the pattern layer includes
a first color pattern layer provided on one face side of the light transmissive base material and configured with a plurality of first color dots, and
a second color pattern layer provided on the first color pattern layer and configured with a plurality of second color dots,
each of the first color dots includes a first color binder and a plurality of first color pigment chips dispersed within the first color binder,
each of the second color dots includes a second color binder and a plurality of second color pigment chips dispersed within the second color binder,
one of the plurality of first color pigment chips and the plurality of second color pigment chips is first interference pigments of a plurality of colors that generate different first interference light beams,
the other of the plurality of first color pigment chips and the plurality of second color pigment chips is second interference pigments that generate monochromatic second interference light of the same color as one of the plurality of first interference pigments, and
additive color mixing of the plurality of first interference light beams and the second interference light is performed.

23. A display device comprising the liquid crystal panel according to any one of claims 16 to 22, and a display unit.
